# EUROPÄISCHE PATENTSCHRIFT

(11) **EP 3 374 931 B1**
(45) Veröffentlichungstag und Bekanntmachung des Hinweises auf die Patenterteilung: **01.01.2020**
(21) Anmeldenummer: 16795031.0
(22) Anmeldetag: 11.11.2016
(51) Int. Cl.: G06K 19/077, G07F 7/08, B32B 5/22, B32B 5/26, B32B 3/08, B32B 3/26

(54) **WERT- ODER SICHERHEITSDOKUMENT AUS EINEM FASERVERBUNDWERKSTOFF UND VERFAHREN ZUM HERSTELLEN DES WERT- ODER SICHERHEITSDOKUMENTS**
VALUE OR SECURITY DOCUMENT MADE OF A FIBER COMPOSITE MATERIAL, AND METHOD FOR PRODUCING THE VALUE OR SECURITY DOCUMENT
DOCUMENT DE VALEUR OU DE SÉCURITÉ FAIT D'UN MATÉRIAU COMPOSITE À BASE DE FIBRES ET PROCÉDÉ DE FABRICATION DU DOCUMENT DE VALEUR OU DE SÉCURITÉ

(30) Priorität: 12.11.2015 DE 102015222364
(43) Veröffentlichungstag der Anmeldung: 19.09.2018
(73) Patentinhaber: Bundesdruckerei GmbH, 10969 Berlin (DE)
(72) Erfinder: FISCHER, Jörg, 13053 Berlin (DE); TRÖLENBERG, Stefan, 15749 Mittenwalde OT Ragow (DE); TIETKE, Markus, 12439 Berlin (DE); FRITZE, Frank, 12437 Berlin (DE); HILLE, Jakob, 10247 Berlin (DE); KRAUS, Micha, 10827 Berlin (DE)
(74) Vertreter: Patentanwälte Bressel und Partner mbB
(86) Internationale Anmeldenummer: PCT/EP2016/077459
(87) Internationale Veröffentlichungsnummer: WO 2017/081268

(56) Entgegenhaltungen:
- WO-A1-2016/139114
- DE-A1-102009 060 862

## Beschreibung

### Gebiet der Erfindung:

Die vorliegende Erfindung betrifft ein Wert- oder Sicherheitsdokument, insbesondere ein Identifikationsdokument (ID-Dokument), beispielsweise eine Identifikationskarte (ID-Karte), mit einer elektrischen Schaltung sowie ein Verfahren zum Herstellen des Wert- oder Sicherheitsdokuments. Insbesondere betrifft die vorliegende Erfindung eine ID-Karte mit einem (integrierten) biometrischen Sensor, mit einer elektronischen Anzeige sowie mit einer RFID-Schaltung.

### Stand der Technik und Hintergrund der Erfindung:

Wert- oder Sicherheitsdokumente dienen beispielsweise zur Identifikation von Personen und/oder Gegenständen und/oder zum bargeldlosen Zahlungsverkehr. Sie weisen unter anderem visuell erkennbare Merkmale auf, die sie eindeutig einer Person und/oder einem Gegenstand und/oder einem Geld- oder Wertpapierkonto zuordnen und die nur dem Dokumenteninhaber erlauben, sich auszuweisen bzw. über den Gegenstand bzw. das Konto zu verfügen und beispielsweise Geldtransfers zu veranlassen. Aus diesem Grunde müssen diese Dokumente gegen Missbrauch geschützt werden. Hierzu können sie beispielsweise einen Fingerabdrucksensor, über die sich der Benutzer beim Gebrauch der Karte authentifizieren kann, sowie eine Anzeigevorrichtung aufweisen.

Üblicherweise werden ID-Dokumente aus Kunststoffmaterialien hergestellt, um deren notwendige Flexibilität zu gewährleisten. Häufig werden Wert- oder Sicherheitsdokumente durch eine Lamination einer Mehrzahl teilweise graphisch gestalteter Polymerfolien, beispielsweise von Polycarbonatfolien, in einer Heiß/Kalt-Laminierpresse im Bogen-Mehrfachformat oder auch in einem Durchlauf-Laminierverfahren mit mehreren hintereinander angeordneten Heiz- und Kühl-Press-Stationen hergestellt. In den Dokumenten enthaltene elektronische Bauelemente sind üblicherweise auf einer Schaltungsträgerlage montiert, die zusammen mit weiteren Dokumentenlagen zu dem Laminat verbunden werden.

Hierzu geht beispielsweise aus DE 10 2013 102 003 A1 ein Chipkartenmodul hervor, das als Bestandteil einer Chipkarte verwendbar ist. Das Modul weist einen Chipkartenmodulträger, beispielsweise aus FR4-Material, auf. Auf dem Träger sind eine Verdrahtungsstruktur, ein integrierter Schaltkreis und eine Chipkarten-Modulantenne angeordnet, wobei der integrierte Schaltkreis und die Antenne mit der Verdrahtungsstruktur elektrisch gekoppelt sind, sowie eine Leuchtvorrichtung, welche auf dem Träger angeordnet ist und mit der Verdrahtungsstruktur elektrisch gekoppelt ist.

In DE 10 2012 223 472 A1 ist ferner ein Wert- und/oder Sicherheitsdokument beschrieben, das eine Antennenstruktur aufweist. Zur Herstellung des Dokuments wird die Antennenstruktur auf einen Trägerkörper, der als Kunststofflage beispielsweise aus Polyimid ausgebildet sein kann, aufgebracht. Ferner kann auf dem Trägerkörper auch ein elektronisches Bauelement angeordnet sein, beispielsweise ein Halbleiterbauelement. Des Weiteren können auch Submodule als Chipträger, basierend auf flexiblen Leiterplatten (Interposa), zum Beispiel aus Polyimid oder FR4 verwendet werden.

In DE 10 2014 204 552 A1 ist ein in einen Rohling eines Wert- oder Sicherheitsdokuments integrierbares Anzeigemodul beschrieben. Das Anzeigemodul weist einen Träger und mindestens einen darauf angeordneten Schaltkreis auf. Der Schaltkreis ist durch mindestens eine Antennenleiterbahn und mindestens ein mit der mindestens einen Antennenleiterbahn elektrisch verbundenes Anzeigeelement gebildet. Als Substratmaterial für den Träger für die Antennenleiterbahn ist unter anderem FR4 genannt.

In DE 10 2009 060 862 ist ein Verfahren zum Laminieren von Folienlagen offenbart, bei dem eine mit einem elektronischen Bauelement bestückte Trägerfolienlage, eine Fließfolienlage und eine Ausgleichsfolienlage gestapelt und unter Bildung eines Folienlaminats miteinander laminiert werden. Es wird angegeben, dass die Folienlagen vorzugsweise aus thermoplastischem Kunststoff bestehen. Typische Materialen, aus denen die Folienlagen bestehen, sind Polycarbonat, Polyvinylchlorid, Polyester, beispielsweise PET, Polyolefine, beispielsweise PE und PP, Acrylnitril-Butadien-Styrol-Copolymer, Polyurethan und Polyetheretherketon.

Aus WO 2016/139114 A1 geht ein Wert- oder Sicherheitsdokument mit einer elektronischen Schaltung hervor. Das Dokument ist aus mindestens zwei in einem Stapel angeordneten und mit einem Fügeverfahren miteinander verbundenen Dokumentenlagen gebildet. Eine erste und eine zweite dieser mindestens zwei Lagen sind eine Stützstrukturlage und eine Schaltungsträgerlage, die aus einem mit Glasfasergewebe verstärkten Duroplast auf der Basis eines Epoxidhares gebildeten Faserverbundwerkstoff gebildet sind. Das Dokument kann zusätzlich Dokumentenlagen in Form einer Fließlage, einer Decklage oder einer Abschlusslage aufweisen, die aus einem Polymer gebildet sind.

### Der Erfindung zugrunde liegende Aufgaben:

Es hat sich herausgestellt, dass die Herstellung von multifunktionellen Identifikationsdokumenten (Multikomponentendokumenten) mit einem oder mehreren integrierten elektronischen Bauelementen bisher sehr aufwändig und teuer ist. Daher sind derartige Smartcards bis heute nur in begrenztem Umfange realisiert worden, beispielsweise One-Time-Password-Karten mit Display (Anzeige), d.h. Karten, bei denen eine Authentifizierung mit stets wechselndem Password durchgeführt wird, etwa über ein Verfahren mit Transaktionsnummern (TAN), die beispielsweise telefonisch übermittelt oder über einen Computer online übermittelt werden.

Ferner hat sich herausgestellt, dass die bekannten durch Laminieren hergestellten Dokumente den Nachteil haben, dass die Stabilität der Dokumente mit einer elektronischen Schaltung bei deren Benutzung nicht ausreichend ist, insbesondere wenn die Dokumente Anzeigevorrichtungen und andere exponierte elektronische Bauelemente aufweisen. Des Weiteren ist auch nicht in allen Fällen gewährleistet, dass die elektronischen Bauelemente und deren elektrische Verbindungen auf einem Schaltungsträger in genügendem Umfange gegen mechanische Schädigungen geschützt sind.

Von daher liegt der vorliegenden Erfindung die Aufgabe zugrunde, zumindest einen der Nachteile der bekannten Wert- oder Sicherheitsdokumente und von deren Herstellverfahren zu überwinden und insbesondere Dokumente mit erhöhter mechanischer Stabilität, vor allen Dingen gegen Biegebeanspruchung, sowie einfache und kostengünstige Herstellverfahren bereitzustellen. Diese Dokumente sollen auch bei längerer Benutzung dimensionsstabil bleiben und hierzu die notwendige hohe Steifigkeit, insbesondere Verwindungssteifheit, und Robustheit haben, um die in den Dokumenten enthaltenen elektronischen Bauelemente beispielsweise gegen Bruch und An- oder Abriss an den elektrischen Kontaktstellen zu schützen. Die bisher verwendeten Polymermaterialien, die zur Herstellung beispielsweise von Smartcards verwendet werden, erfüllen diese Anforderungen nicht. Des Weiteren soll ein Aufbau für Wert- oder Sicherheitsdokumente in Form von multifunktionellen Smartcards gefunden werden, der einer zum Prioritätszeitpunkt dieser Anmeldung im Entwurf befindlichen Norm ISO/DIS 18328-2 mit einer Kartendicke von 2,5 mm entspricht. Das Dokument soll auch gegen Delaminieren geschützt sein. Die Wert- oder Sicherheitsdokumente sollen vielseitig einsetzbar sein.

### Definitionen:

Soweit nachfolgend jeweils Begriffe in der Singularform verwendet werden, beispielsweise 'elektrische Schaltung', 'Dokumentenlage', 'Schaltungsträgerlage', 'Ausgleichslage', 'Decklage', 'elektronisches Bauelement', 'Ausnehmung', 'Durchbrechung' usw., so können darunter jeweils auch die entsprechenden Pluralformen zu verstehen sein, nämlich 'elektrische Schaltungen', 'Dokumentenlagen', 'Schaltungsträgerlagen', 'Ausgleichslagen', 'Decklagen', 'elektronische Bauelemente', 'Ausnehmungen', 'Durchbrechungen' usw., und umgekehrt, sofern nicht ausdrücklich etwas anderes angegeben ist.

Soweit in der Beschreibung und in den Ansprüchen der vorliegenden Anmeldung der Begriff 'Wert- oder Sicherheitsdokument' verwendet wird, ist darunter beispielsweise ein Personalausweis, Führerschein, ein Zugangskontrollausweis oder ein anderes ID-Dokument, beispielsweise eine ID-Karte, ein Fahrzeugschein, eine Scheck-, Bank-, Kredit- oder Barzahlungskarte, Kundenkarte, Gesundheitskarte, ein Firmenausweis, Berechtigungsnachweis, Mitgliedsausweis, Geschenk- oder Einkaufsgutschein oder ein sonstiger Berechtigungsnachweis oder noch ein anderes Wert- oder Sicherheitsdokument zu verstehen. Das Wert- oder Sicherheitsdokument ist insbesondere eine Smartcard, wenn das Dokument in Kartenform vorliegt. Das Wert- oder Sicherheitsdokument kann im Format ID-1, ID-2, ID-3, ID-T oder in irgendeinem anderen normierten oder nicht normierten Format vorliegen, beispielsweise in Kartenform. Hierzu wird auf die einschlägige Norm ISO/IEC 7810 in der am Prioritätstag gültigen Fassung hingewiesen. Vorzugsweise ist das Format des Dokuments ID-1. Das Wert- oder Sicherheitsdokument soll den normierten Anforderungen genügen, beispielsweise ISO 10373, ISO/IEC 7810, ISO 14443 sowie gegebenenfalls der noch im Entwurf befindlichen Norm ISO/DIS 18328-2 in den am Prioritätstag jeweils gültigen Fassungen.

Das Wert- oder Sicherheitsdokument ist dadurch gekennzeichnet, dass es authentifizierende Informationen enthält, beispielsweise Informationen über die Person oder die Sache, der das Dokument zugeordnet ist, oder Informationen, mit denen seine Echtheit verifiziert werden kann. Beispielsweise kann das Wert- oder Sicherheitsdokument mindestens einen ohne optische Hilfsmittel sichtbaren oder ausschließlich maschinell lesbaren Aufdruck aufweisen, der für die Person, der das Dokument zugewiesen ist, personalisierend ist oder der die Echtheit des Dokuments bezeugt. Alternativ oder zusätzlich können auch individualisierende Daten in einem elektronischen Datenspeicher in dem Dokument enthalten sein. Oder das Dokument kann mindestens ein anderes mit optischen Mitteln lesbares Sicherheitselement und/oder ein taktiles Sicherheitselement aufweisen, das eine eindeutige Zuordnung des Dokuments zu einer Person oder den Nachweis für dessen Echtheit erlaubt.

Soweit in der Beschreibung und in den Ansprüchen der vorliegenden Anmeldung der Begriff 'elektronisches Bauelement' verwendet wird, ist hierunter jedes beliebige aktive oder passive elektronische Bauelement zu verstehen, insbesondere ein Halbleiterbauelement, das nachfolgend auch als 'IC' oder 'Chip' bezeichnet sein kann. Unter einem Halbleiterbauelement oder IC oder Chip ist beispielsweise ein ungehäuster Halbleiterchip (bare die) oder ein gehäuster Halbleiterchip, beispielsweise in Form eines Surface Mount Device (SMD), eines Chip Scale Package (CSP) oder einer der folgenden Bauformen: DIP, TQFP, MLF, SOTP, SOT, PLCC, QFN, SSOT, BGA, MOB, oder ein Chipmodul zu verstehen. Falls der Chip ungehäust ist, kann er gedünnt eingesetzt sein.

Soweit in der Beschreibung und in den Ansprüchen der vorliegenden Anmeldung die Begriffe 'individualisierend', 'individualisiert', 'personalisierend' und 'personalisiert' verwendet werden, so ist darunter zu verstehen, dass sich das Wert- oder Sicherheitsdokument, auf das sich der Begriff bezieht, von anderen Wert- oder Sicherheitsdokumenten unterscheidet und dieses Wert- oder Sicherheitsdokument einer Entität (im Falle der Begriffe 'individualisierend' oder 'individualisiert'), insbesondere einer Person (im Falle der Begriffe 'personalisierend' oder 'personalisiert'), zuordnet. Das Wert- oder Sicherheitsdokument kann anstelle einer Person auch einem Gegenstand, wie einem Kraftfahrzeug, Verkaufsprodukt (in diesem Falle ist das Wert- oder Sicherheitsdokument beispielsweise eine Verpackung oder ein Etikett, Label, Anhänger, Aufkleber oder das Produkt selbst) oder einem Wertpapier, zugeordnet werden. Durch die Individualisierung bzw. Personalisierung erkennt ein Dritter die eindeutige Zuordnung des Wert- oder Sicherheitsdokuments zu der Entität oder Gruppen von gleichartigen oder ähnlichen Entitäten.

Soweit in der Beschreibung und in den Ansprüchen der vorliegenden Anmeldung die Begriffe 'Laminieren' und 'Lamination' verwendet werden, so ist darunter das flächige Verbinden von zwei Lagen unter Einwirkung von Druck und Wärmeeinbringung zu verstehen, wobei kein (separates) Klebermaterial zwischen den beiden zu verbindenden Lagen verwendet wird. Beim Laminieren bildet sich durch Erweichen bzw. Flüssigwerden der Lagenmaterialien eine monolithische Verbindung zwischen den Lagen, d.h. eine Grenzfläche ist nach dem Laminieren nicht erkennbar.

### Grundzüge der Erfindung und bevorzugte Ausführungsformen:

Gemäß einem ersten Aspekt der vorliegenden Erfindung werden die vorstehenden Aufgaben durch ein Wert- oder Sicherheitsdokument, insbesondere durch ein ID-Dokument, das eine elektrische Schaltung aufweist, und ganz besonders durch eine eine elektrische Schaltung aufweisende ID-Karte, gelöst.

Gemäß einem zweiten Aspekt der vorliegenden Erfindung werden die vorstehenden Aufgaben auch durch ein Verfahren zum Herstellen des die elektrische Schaltung aufweisenden Wert- oder Sicherheitsdokuments gelöst.

Das erfindungsgemäße Wert- oder Sicherheitsdokument ist aus mindestens drei in einem Stapel angeordneten und mit einem Fügeverfahren flächig miteinander verbundenen Dokumentenlagen gebildet, von denen eine erste Dokumentenlage durch eine die elektrische Schaltung tragende Schaltungsträgerlage, mindestens eine zweite Dokumentenlage durch jeweils eine mindestens eine Durchbrechung und/oder Ausnehmung aufweisende Ausgleichslage und mindestens eine dritte Dokumentenlage durch jeweils eine vorzugsweise außenliegende Decklage gebildet sind. Die erste und die mindestens eine zweite und die mindestens eine dritte Dokumentenlage sind erfindungsgemäß aus einem Faserverbundwerkstoff gebildet, der aus einem mit Glasfasergewebe verstärkten Duroplast auf Basis eines Epoxidharzes gebildet ist. Das Wert- oder Sicherheitsdokument enthält im Gegensatz zu einem Dokumentenrohling, aus dem es hergestellt wird, individualisierende Daten.

Zur Herstellung des erfindungsgemäßen Wert- oder Sicherheitsdokuments dient ein Verfahren, das die folgenden Verfahrensschritte umfasst:
(a) Bereitstellen einer ersten Dokumentenlage in Form einer die elektrische Schaltung tragenden Schaltungsträgerlage, mindestens einer zweiten Dokumentenlage in Form jeweils einer mindestens eine Durchbrechung und/oder Ausnehmung aufweisenden Ausgleichslage und mindestens einer dritten Dokumentenlage in Form jeweils einer Decklage;
(b) Stapeln der ersten und der mindestens einen zweiten und der mindestens einen dritten Dokumentenlage zu einem Dokumentenlagenstapel;
(c) Unlösbares Fügen der ersten und der mindestens einen zweiten und der mindestens einen dritten Dokumentenlage, wobei ein Dokumentenrohling entsteht; und
(d) Individualisieren des Dokumentenrohlings unter Ausbildung des Wert- oder Sicherheitsdokuments.

Die erste und die mindestens eine zweite und die mindestens eine dritte Dokumentenlage sind erfindungsgemäß aus einem Faserverbundwerkstoff gebildet, der aus einem mit Glasfasergewebe verstärkten Duroplast auf Basis eines Epoxidharzes gebildet ist.

Indem ein Faserverbundwerkstoff für die Dokumentenlagen in dem Wert- oder Sicherheitsdokument verwendet wird, ist gewährleistet, dass das Dokument auch bei lang andauernder Benutzung gegen Verwinden und Verbiegen geschützt ist. Insbesondere stellen sich keine Ermüdungserscheinungen des Materials ein, die zu einer Verformung unter Materialbelastung führen würden. Auch thermische Einflüsse vermögen dem Dokument, anders als herkömmlich aufgebauten Dokumenten, nicht die Dimensionsstabilität zu nehmen. Von daher kann das Dokument beispielsweise auf einer unebenen Unterlage bei intensiver Sonneneinstrahlung abgelegt und dort über längere Zeit belassen werden, ohne dass es Schaden nimmt. Die hohe Verwindungssteifheit und Robustheit des Dokuments wird durch dessen Monocoque-Aufbau erzielt, d.h. durch die Verbindung aller Dokumentenlagen in einem Laminierverfahren mittels des Faserverbundwerkstoffes miteinander. Dadurch wird ein Schutz der elektronischen Bauelemente gegen Beschädigung oder sogar Bruch erreicht. Das Dokument ist nicht delaminierbar und einfach herstellbar.

Durch den Aufbau des Dokuments ausschließlich oder zumindest fast ausschließlich aus einem Faserverbundwerkstoff kann die in der Leiterplattenherstellung verwendete Technologie zur Erzeugung von Basismaterialien für die Herstellung von Wert- oder Sicherheitsdokumenten übernommen werden. Dadurch können die für diese Technologie erarbeiteten Herstellvorschriften problemlos auf das vorliegende technische Gebiet übertragen werden. Bei der Herstellung des Wert- oder Sicherheitsdokuments kann daher auf zusätzliche Laminierschritte mit den für bekannte Wert- oder Sicherheitsdokumente üblichen Kunststoff-Kartenmaterialien verzichtet werden.

Indem die elektrische Schaltung des Wert- oder Sicherheitsdokuments zur Speicherung von individualisierenden Daten ausgebildet sein kann, ergibt sich die Möglichkeit einer außerordentlich hohen Datensicherheit, da das Enrolment (Einschreiben) auf der Karte stattfindet und die Daten nur in dem Dokument aufgenommen, sicher gespeichert und verifiziert werden. Daher verlassen sensible Daten das Dokument nicht.

Der Faserverbundwerkstoff ist nicht schmelzbar. Darunter ist vorliegend zu verstehen, dass der Werkstoff nicht ohne Zersetzung schmelzbar ist. Der Werkstoff kann also nicht ohne Veränderung seiner chemischen Zusammensetzung in einen flüssigen Zustand übergehen, wenn auch der Werkstoff eine Glasübergangstemperatur aufweisen kann, bei der der Werkstoff von einem spröden Glaszustand in einen weichen gummielastischen Zustand übergeht. Bei der Herstellung wird zwar ein Laminierverfahren angewendet, bei dem die Lagenkomponenten zeitweilig verflüssigt werden. Durch eine chemische Reaktion (Polymerisation) erstarrt (härtet) das Material aber und ist daher anschließend nicht mehr schmelzbar.

Der Faserverbundwerkstoff wird daher mit einem duroplastischen Polymer-Matrix-Werkstoff gebildet. Der Polymerwerkstoff kann beispielsweise auf der Basis eines bi- oder höherfunktionellen Epoxidharzes, insbesondere auf Basis von Bisphenol A, oder eines Gemisches eines Epoxidharzes mit einem Bismaleimid/Triazin-Harz hergestellt sein. Letzteres ist beispielsweise in DE 25 12 085 B2 beschrieben.

Das Fasermaterial des Faserverbundwerkstoffes ist durch Glasfasern gebildet. Die Fasern in dem Matrix-Werkstoff liegen in Form eines Gewebes vor, beispielsweise in Form von Glas-Gewebematten, die mit dem Matrix-Werkstoff getränkt sind, bevor dieser dann ausgehärtet wird. Derartige mit vorpolymerisiertem Epoxidharzmaterial getränkte Glas-Gewebematten sind als Prepregs bekannt.

Gemäß der vorliegenden Erfindung ist der Faserverbundwerkstoff der ersten, mindestens einen zweiten und mindestens einen dritten sowie gegebenenfalls weiteren Dokumentenlagen aus einem mit Glasfasergewebe verstärkten Duroplast auf der Basis eines Epoxidharzes gebildet. Derartige Materialien sind wegen ihrer Eigenschaften gegenüber chemischen, mechanischen und thermischen Beeinflussungen äußerst resistent. Außerdem haben diese Materialien auch hervorragende elektrische Eigenschaften, die sich für die Anwendung als Wert- oder Sicherheitsdokument mit einer elektrischen Schaltung besonders anbieten. Insbesondere die mechanische Stabilität, beispielsweise Dimensionsstabilität gegen Biegebeanspruchung, ist bei derartigen Materialien aufgrund der Kombination eines nicht schmelzbaren Materials durch Auswahl eines Duroplasts und der Einbettung eines Glasfasergewebes in das Polymermaterial hervorragend.

Als besonders bevorzugte Materialien sind FR4-, FR5- und FR5/BT-Material verwendbar. FR4 wird aus mit bifunktionellem Epoxidharz getränkten Glasfasergewebematten hergestellt und ist aufgrund der Bromierung des Harzes flammhemmend. FR5-Material unterscheidet sich davon durch die Verwendung von höherfunktionellen Epoxidharzen (tetra-, multifunktionellen Harzen). FR5/BT-Material enthält zusätzlich Bimaleimid/Triazin-Harz. Die T_{g}-Punkte (Glasübergangstemperaturen) dieser Materialien steigen in der Reihe T_{g}(FR4) <T_{g}(FR5) < T_{g}(FR5/BT) an. Durch Verwendung von FR5 oder sogar FR5/BT kann eine höhere thermische Belastbarkeit erreicht werden.

In einer bevorzugten Weiterbildung der vorliegenden Erfindung ist das Fügeverfahren ein Laminierverfahren, sodass zwischen den Dokumentenlagen in dem durch Lamination entstandenen Wert- oder Sicherheitsdokument keine Grenzflächen erkennbar sind. Bei dem Laminierverfahren werden die Dokumentenlagen unter Einwirkung von Wärme und Aufbringung von Druck flächig miteinander verbunden. Hierzu wird der Stapel aus den Dokumentenlagen zwischen Presswerkzeugen, beispielsweise Presstempeln, Pressblechen oder Pressplatten, eingespannt und unter Druck gesetzt sowie dabei erhitzt, sodass das Harzmaterial der Dokumentenlagen zuerst erweicht und dann aushärtet. Die Laminierverfahren zeichnen sich dadurch aus, dass die Dokumentenlagen ohne weitere dazwischen angeordnete Materialien direkt miteinander in Kontakt gebracht und dadurch direkt miteinander verbunden werden. Die gebildete Verbindung ist unlösbar. Es gibt diskontinuierliche und kontinuierliche Laminierverfahren, d.h. Verfahren bei denen die Stapel während einer vorgegebenen Zeitspanne zwischen vorgegebenen Presswerkzeugen eingespannt und dem Laminierverfahren unterworfen werden (diskontinuierliches Verfahren) oder durch eine Laminiervorrichtung hindurchgeführt werden, während sie der Druckaufbringung und dem Erhitzen unterworfen werden. Die mit dem Laminierverfahren erhältlichen Laminate sind äußerst stabil gegen Delaminationen oder andere zerstörende Einflüsse. Es wird eine sehr feste und steife Struktur gebildet. Im fertig laminierten Dokumentenrohling sind lediglich noch die Fasern des Faserverbundes erkennbar. Die durch das Harz gebildeten Anteile des Laminats sind zu einem einheitlichen Körper zusammengeführt und stellen damit eine monolithische Masse dar, in die die Fasern eingebettet sind.

Alternativ kann das Fügeverfahren grundsätzlich auch ein Klebeverfahren sein, bei dem ein Klebemittel zwischen die Dokumentenlagen eingefügt wird.

Die Schaltungsträgerlage trägt die elektrische Schaltung, indem Verdrahtungsmuster (Leiterbahnen) auf und/oder in der Schaltungsträgerlage hergestellt werden, beispielsweise mit auf dem Gebiet der Leiterplattentechnologie üblichen Verfahren zum Herstellen von Leiterbahnen, und indem elektronische Bauelemente entsprechend dem gewünschten Schaltungslayout auf der Schaltungsträgerlage montiert und mit den Leiterbahnen verbunden werden. Hierzu werden beispielsweise Kupferleiterbahnen mit fotolithografischen Verfahren strukturiert und geätzt oder mit chemischen Verfahren auf den Oberflächen der Schaltungsträgerlage chemisch abgeschieden oder Leiterbahnen mit einer Leitpaste, beispielsweise mit darin enthaltenen Silberpartikeln, mit einem Druckverfahren erzeugt. Die Schaltungsträgerlage kann eine einseitig mit einem Verdrahtungsmuster oder beidseitig mit je einem Verdrahtungsmuster versehene Leiterplatte sein oder in Form einer Mehrlagen-Leiterplatte (Multilayer) vorliegen. Die elektronischen Bauelemente werden vorzugsweise mittels eines Klebemittels auf der Schaltungsträgerlage fixiert. Dabei oder nachfolgend werden elektrische Verbindungen zwischen den Kontaktflächen der Bauelemente und den Leiterbahnen mittels eines üblichen Löt- oder Bondverfahrens hergestellt. Hierzu kann vor der Durchführung des Lötverfahrens oder bereits vor dem Platzieren der Bauelemente auf der Schaltungsträgerlage eine Lötstoppmaske auf die mit den Bauelementen zu bestückende Oberfläche der Schaltungsträgerlage aufgetragen werden. Durch die Herstellung der elektronischen Schaltung auf der Schaltungsträgerlage wird eine Schaltungslage gebildet, die die Schaltungsträgerlage, die Leiterbahnen und die elektronischen Bauelemente umfasst. Die Schaltungsträgerlagen für mehrere Dokumentenrohlinge werden typischerweise zunächst in einem Mehrfachnutzen mit den Leiterbahnen und gegebenenfalls mit der Lötstoppmaske versehen, woraufhin die Mehrfachnutzen der Schaltungsträgerlagen mit den elektronischen Bauelementen bestückt und hierzu einem Löt- oder Bondverfahren unterworfen werden.

Die elektrische Schaltung ist durch eine Verdrahtung aus Leiterbahnen und die elektronischen Bauelemente gebildet. Die Verdrahtung kann mit einem oder mehreren elektronischen Bauelementen bestückt sein. Die elektrische Schaltung kann in mehreren Verdrahtungsebenen auf und/oder in der Schaltungsträgerlage realisiert sein und zwar entweder auf einer oder beiden Außenseiten der Schaltungsträgerlage und/oder in einer oder mehreren von in der Schaltungsträgerlage innenliegenden Ebenen. Elektrische Verbindungen zwischen den einzelnen Verdrahtungsebenen werden durch metallisierte Löcher in der Schaltungsträgerlage hindurch erzeugt.

Die mindestens eine Ausgleichslage liegt in dem zu fügenden Stapel flächig an der Schaltungsträgerlage an und zwar an der Seite, an der sich elektronische Bauelemente auf der Schaltungsträgerlage befinden. Falls die Schaltungsträgerlage an beiden Seiten mit elektronischen Bauelementen bestückt ist, liegt an beiden Seiten der Schaltungsträgerlage jeweils eine Ausgleichslage an.

Die mindestens eine Ausgleichslage ist vorzugsweise dadurch gekennzeichnet, dass sie Durchbrechungen oder zumindest Ausnehmungen an den Stellen aufweist, an denen die elektronischen Bauelemente auf den Seiten der Schaltungsträgerplatte über deren Oberflächen vorstehen, an denen die Ausgleichslagen flächig anliegen. Dadurch können die elektronischen Bauelemente in die Durchbrechungen oder Ausnehmungen hineinragen. Im Gegensatz zu Durchbrechungen durchdringen die Ausnehmungen die Ausgleichslage nicht vollständig und sind demnach einseitig geschlossen. In einer weiteren bevorzugten Weiterbildung der vorliegenden Erfindung sind zumindest an einer Seite der Schaltungsträgerlage mindestens ein elektronisches Bauelement, einschließlich mindestens einer Eingabevorrichtung, beispielsweise eines biometrischen Sensors oder einer Kamera und/oder mindestens einer Ausgabevorrichtung, beispielsweise einer Anzeigevorrichtung oder eines Lautsprechers, angeordnet, und die Ausgleichslage weist an dieser Seite der Schaltungsträgerlage in diesem Falle vorzugsweise mindestens eine Ausnehmung und/oder Durchbrechung auf, wobei mindestens ein elektronisches Halbleiterbauelement, einschließlich mindestens einer Ausgabevorrichtung und/oder mindestens einer Eingabevorrichtung und/oder noch eines anderen elektronischen Bauelements, in einem assemblierten Zustand von jeweils einer Ausnehmung und/oder Durchbrechung in der Ausgleichslage aufgenommen wird. Dadurch wird erreicht, dass diese elektronischen Bauelemente gegen Brechen oder An- oder Abrisse von deren elektrischen Kontakten bei einer mechanischen Beanspruchung des Dokuments geschützt sind. In diesem Falle wird ausgenutzt, dass die Ausnehmungen und/oder Durchbrechungen größer sind als die elektronischen Bauelemente, sodass die Bauelemente im assemblierten Zustand der Ausgleichslage mit der Schaltungsträgerlage von den Ausnehmungs- oder Durchbrechungswänden beabstandet sind und sich zwischen den Bauelementen und den Ausnehmungs- oder Durchbrechungswänden Hohlräume ergeben. Zu dem vorgenannten Zweck ist die Dicke der Ausgleichslage im Bereich der Ausnehmungen und/oder Durchbrechungen vorzugsweise mindestens so groß wie die Höhe, um die sich die Bauelemente über die Schaltungsträgerlage erheben, sodass die Bauelemente mit der Außenfläche der Ausgleichslage an der der Schaltungsträgerlage gegenüber liegenden Seite allenfalls bündig abschließen, keinesfalls aber über diese vorstehen. Dadurch wird ein effektiver Schutz der Bauelemente gegen mechanische Beeinträchtigung geschaffen. Die Ausgleichslage gleicht in diesem Falle Unebenheiten, die ansonsten durch die elektronischen Bauelemente gebildet würden, aus, d.h. sie dient zum Höhenausgleich. Falls die Schaltungsträgerlage an beiden Seiten mit elektronischen Bauelementen bestückt ist, werden Ausgleichslagen an beiden Seiten der Schaltungsträgerlage angeordnet, sodass die jeweiligen Bauelemente von entsprechenden Ausnehmungen und/oder Durchbrechungen in den Ausgleichslagen aufgenommen werden können. Die vorstehenden Erläuterungen gelten für elektronische Bauelemente und Ausgleichslagen an beiden Seiten der Schaltungsträgerlage entsprechend.

In einer weiteren bevorzugten Weiterbildung der vorliegenden Erfindung ist der vorgenannte mindestens eine Hohlraum, der durch die mindestens eine Ausnehmung und/oder Durchbrechung der mindestens einen Ausgleichslage und das mindestens eine von der Ausnehmung oder Durchbrechung aufgenommene elektronische Bauelement gebildet ist, nach dem Zusammentragen der Schaltungsträgerlage mit der mindestens einen Ausgleichslage zu einem Stapel mit einem Polymermaterial gefüllt. Dieses Polymermaterial vernetzt beim Montageprozess und bildet eine Umhüllung um die elektronischen Bauelemente innerhalb des Dokumentenrohlings. Vorzugsweise ist dieses Polymermaterial nach der Vernetzung elastisch, sodass es Scher- und Druckkräfte aufnehmen und ableiten kann. Alternativ kann auch eine weitere Dokumentenlage als Fließlage auf der der Schaltungsträgerlage abgewandten Seite der Ausgleichslage angeordnet sein, deren thermische Eigenschaften dazu ausgebildet sind, dass diese Lage bei der Montage des Dokumentenrohlings, insbesondere bei einem thermischen Behandlungsschritt, beispielsweise beim Laminieren, erweicht, in die Hohlräume hineinfließt und diese dabei ausfüllt. Hierzu ist die Erweichungstemperatur des Polymermaterials dieser Fließlage so gering zu wählen, dass das Material bei der angewendeten Fügetemperatur erweicht bzw. flüssig wird und in die Hohlräume fließt. Das die Hohlräume ausfüllende Polymermaterial oder das Material der Fließlage ist vorzugsweise transparent, um zu gewährleisten, dass eine von dem Material umhüllte Anzeigevorrichtung von außen sichtbar bleibt.

Die mindestens eine Decklage dient dazu, gegebenenfalls nach außen offene Durchbrechungen in den Ausgleichslagen zu schließen. Falls die Schaltungsträgerlage nur einseitig mit elektronischen Bauelementen bestückt ist, sodass eine Ausgleichslage nur an dieser Seite erforderlich ist, ist eine Decklage ebenfalls nur an dieser Seite notwendig. Falls Ausgleichslagen an beiden Seiten der Schaltungsträgerlage angeordnet sind, jedoch nur eine der Ausgleichslagen Durchbrechungen, die andere aber ausschließlich Ausnehmungen zur Aufnahme der dortigen elektronischen Bauelemente aufweist, so ist ebenfalls nur eine Decklage erforderlich, um die nach außen offenen Durchbrechungen abzudecken.

In einer weiteren bevorzugten Weiterbildung der vorliegenden Erfindung weist die mindestens eine Decklage eine Durchbrechung auf, sodass eine sich darin befindende Sensorvorrichtung nach außen hin freiliegt. Dadurch wird beispielsweise eine Berührung eines biometrischen Sensors, beispielsweise einer Fingerabdruckscan-Vorrichtung, mit einem Finger von der Vorderseite des Dokuments ermöglicht. Alternativ kann die Sensorvorrichtung auch eine Kamera sein. In diesem Fall sorgt die Durchbrechung dafür, dass die Kamera störungsfrei Bilder aufnehmen kann. Diese Durchbrechung befindet sich demnach an der Stelle in der Decklage, an der sich die Sensorvorrichtung auf der Schaltungsträgerplatte befindet. Ansonsten weist die mindestens eine Decklage vorzugsweise keine Ausnehmungen und/oder Durchbrechungen auf.

Ferner können ein Sicherheitsdruck der mindestens einen Decklage und/oder einer opaken Innenlage bereichsweise unterbrochen sein, sodass ein Durchsichtsfenster gebildet wird, damit beispielsweise eine dahinter angeordnete Anzeigevorrichtung von außen sichtbar ist. Dies setzt natürlich voraus, dass das Material der Decklage an sich transparent oder zumindest transluzent ist und die Decklage nur durch den Sicherheitsdruck opak wird.

In einer weiteren bevorzugten Weiterbildung der vorliegenden Erfindung sind die mindestens eine Decklage und die Schaltungsträgerlage transparent oder transluzent. Damit wird erreicht, dass von einer Leuchtvorrichtung, beispielsweise einer LED, die sich innerhalb des Dokuments befindet, ausgehendes Licht von außen sichtbar ist. Insbesondere ist es vorteilhaft, wenn dieses Licht von beiden Seiten des Dokuments erkennbar ist, damit das Dokument von einer linkshändigen Person und ebenso auch von einer rechtshändigen Person einfach bedient werden kann. Des Weiteren wird somit erreicht, dass man das Licht sowohl beim Halten des Dokumentes bei Verwendung des Daumens oder des Zeigefingers auf der Fingerabdruckscanvorrichtung komfortabel erkennt. Für die Erkennung dieser Leuchterscheinung reicht es auch aus, wenn sich die Transparenz oder Transluzenz auf den Bereich beschränkt, in dem das Leuchtmittel das Licht abgibt. Die Decklage kann eine Druckschicht aufweisen, die aber dort, wo sich die Leuchtvorrichtung auf der Schaltungsträgerlage befindet, vorzugsweise unterbrochen ist.

Aus den vorstehenden Erläuterungen ergibt sich, dass sich die mindestens eine zweite Dokumentenlage vorzugsweise zwischen der ersten und einer der dritten Dokumentenlagen befindet.

Die Schaltungsträgerlage, die mindestens eine Ausgleichslage und die mindestens eine Decklage können so dünn sein, dass sie biegbar sind (folienartig), und beispielsweise jeweils eine Dicke in einem Bereich von 50 um bis 500 um aufweisen. Die Schaltungsträgerlage, die mindestens eine Ausgleichslage und die mindestens eine Decklage weisen in dem fertig hergestellten Dokumentenrohling vorzugsweise dasselbe Format und dieselbe Größe auf. Typischerweise werden diese Lagen jedoch erst nach dem Verbinden in dem Endformat und der Endgröße erzeugt, indem die Dokumentenrohlinge aus Mehrfachnutzen vereinzelt werden.

In noch einer weiteren bevorzugten Weiterbildung der vorliegenden Erfindung kann das Wert- oder Sicherheitsdokument an der der Ausgleichslage gegenüber liegenden Seite der Schaltungsträgerlage noch eine weitere Dokumentenlage in Form einer Abschlusslage aufweisen. Die Abschlusslage befindet sich in einer bevorzugten Weiterbildung der vorliegenden Erfindung demnach auf der Seite des Dokuments, die der Seite gegenüberliegt, an der sich die Ausgleichslage und die Decklage befinden. Die Abschlusslage kann wie die Decklage vorzugsweise transparent oder transluzent sein. Alternativ dazu oder zusätzlich kann die Abschlusslage eine Druckschicht aufweisen, die aber dort, wo sich auf der Schaltungsträgerlage eine Leuchtvorrichtung oder gegebenenfalls auch eine Sensorvorrichtung befindet, vorzugsweise unterbrochen ist. Die Abschlusslage dient wie die Decklage primär dazu, die Verdrahtung und die elektronischen Bauelemente im Inneren des Dokuments gegen äußere Einflüsse zu schützen. Auch die Abschlusslage ist wie die Schaltungsträgerlage, die mindestens eine Ausgleichslage und die mindestens eine Decklage durch ein Faserverbundmaterial gebildet. Das Material kann vorzugsweise dasselbe sein wie für die vorgenannten Dokumentenlagen.

Die Bedruckung auf der Decklage und/oder der Abschlusslage befindet sich vorzugsweise an der nach innen weisenden Seite der Lage, sodass sie gegen mechanische Beeinträchtigungen, wie Abrieb, geschützt ist. Grundsätzlich ist es aber auch möglich, dass sich die Bedruckung auf der Außenseite der jeweiligen Dokumentenlage befindet. Die Bedruckung der Decklage und/oder der Abschlusslage kann zur farbigen Individualisierung/Personalisierung des Dokumentenrohlings dienen. Beispielsweise kann eine der beiden Lagen oder können beide Lagen mit individualisierenden/personalisierenden Informationen des Dokumenteninhabers bedruckt sein, beispielsweise mit dem Gesichtsbild des Dokumenteninhabers, mit Daten des Inhabers in alphanumerischer Form, wie dem Namen, Geburtsdatum und -ort, der Adresse und dergleichen, und/oder der Unterschrift des Inhabers. Anstelle des Individualisierungs-/Personalisierungsdruckes oder zusätzlich dazu kann auch ein nicht individualisierender (Dekor/-Sicherheits-) Druck auf die Lage(n) aufgedruckt werden. Diese Dekor-/Sicherheitsdrucke werden vorzugsweise auf die nach innen weisenden Flächen aufgebracht, können grundsätzlich aber auch außen aufgebracht werden.

Zusätzlich zu der Decklage und der Abschlusslage können noch weitere außen liegende Lagen vorhanden sein. In diesem Falle weisen diese weiteren außen liegenden Dokumentenlagen anstelle der durch sie verdeckten Deck- und/oder Abschlusslagen gegebenenfalls eine Bedruckung auf. Diese weiteren Dokumentenlagen können aber auch lediglich als transparente oder transluzente Lagen ausgebildet sein, durch die die Bedruckung der Deck- und/oder Abschlusslagen von außen erkennbar bleibt.

In einer weiteren bevorzugten Weiterbildung der vorliegenden Erfindung umfasst die elektrische Schaltung eine RFID-Schaltung mit einem RFID-IC (integrated circuit), der ein elektronisches Halbleiterbauelement ist, und einer RFID-Antenne, ferner mindestens eine Eingabevorrichtung, beispielsweise eine biometrische Sensorvorrichtung und/oder eine Kamera und/oder eine Tastatur, und mindestens eine Ausgabevorrichtung, beispielsweise eine elektronische Anzeigevorrichtung (Display). Damit kann ein multifunktionales interaktives Identifikationsdokument realisiert werden. Darüber hinaus kann die elektronische Schaltung weitere elektronische Bauelemente enthalten, vorzugsweise einen zentralen Prozessor, einen Krypto-Prozessor und ein Power-Management-System. Durch eine geeignete Systemarchitektur kann mit den genannten Komponenten ein hoher Datenschutz erreicht werden, weil sensible biometrische Daten des Dokumenteninhabers ausschließlich in dem Dokument kryptografisch gespeichert und damit sicher geschützt werden. Alternativ zu der RFID-Schaltung oder zusätzlich zu dieser kann die Schaltungslage auch ein mit an einer Außenseite des Dokuments freiliegenden Kontaktflächen versehenes IC-Modul tragen. Durch die Integration der RFID-Schaltung in das Wert- oder Sicherheitsdokument sind eine kontaktlose Kommunikation des Wert- oder Sicherheitsdokuments mit einem externen Schreib-/Lesegerät sowie eine externe Energieversorgung möglich. Die elektrische Schaltung kann als weiteres elektronisches Bauelement auch mindestens eine Anzeige-Lichtquelle, beispielsweise eine LED, aufweisen, mit der ein optisches Signal abgegeben werden kann, etwa dass ein Lesevorgang eine erfolgreiche Authentifizierung anzeigt (grün) oder dass ein Lesevorgang eine nicht erfolgreiche Authentifizierung anzeigt (rot). Alternativ oder zusätzlich kann das Dokument mit einem akustischem Signalgeber, beispielsweise einem Lautsprecher, ausgerüstet sein.

Die RFID-Antenne kann durch mehrere spulenartige Windungen gebildet sein, die beispielsweise in einer einzigen Schaltungsebene angeordnet sind. Beispielsweise sind die Windungen der Antenne auf die Schaltungsträgerlage aufgedruckt. Der RFID-IC ist mit den Windungen der Antenne verbunden. Die Windungen der Antenne können beispielsweise auf die Schaltungsträgerlage aufgedruckt werden. Dieser Druckvorgang kann mit einer einschlägig bekannten Drucktechnik des Durch-, Tief-, Hoch- und Flachdrucks oder Digitaldrucks vorgenommen werden. Gemäß einer bevorzugten Ausführungsform der Erfindung ist die Antenne spulenförmig ausgebildet und in einem Randbereich des Dokuments angeordnet. Die Windungen der Antenne sind dabei vorzugsweise umlaufend entlang des Randes des Dokuments angeordnet, d.h. die einzelnen Windungen sind nebeneinander angeordnet. Beispielsweise wird die Antenne mit einer aufgedruckten Paste, die leitfähige Partikel enthält, insbesondere mit einer Silberleitpaste, oder einem anderen leitfähigen Material, wie zum Beispiel einem leitfähigen Polymer, gebildet.

Der RFID-IC kann als ungehäuster oder gehäuster Chip in einer der oben genannten Bauformen vorliegen. Falls der RFID-IC als ungehäuster Chip vorliegt, kann er durch Flip-Chip-Klebetechnik auf der Schaltungsträgerlage montiert und mit der Antenne verbunden werden. Beispielsweise kann er in bekannter Weise über einen anisotrop leitfähigen Klebstoff und mittels eines kollabierten Lots mit der Antenne elektrisch und mechanisch verbunden werden. Der RFID-IC weist einen Speicher auf, in den vorzugsweise individualisierende, besonders bevorzugt personalisierende, Informationen eingeschrieben werden können. Beispielsweise können biometrische Informationen des Dokumenteninhabers, wie Gesichtsbild, Fingerabdrücke, Unterschriftsprobe, ferner der Name, das Geburtsdatum, die Adresse und dergleichen, eingeschrieben werden.

Die mindestens eine Eingabevorrichtung kann beispielsweise durch einen biometrischen Sensor, einen Schalter, eine Tastatur oder einen Beschleunigungssensor gebildet sein. Die biometrische Sensorvorrichtung kann beispielsweise eine Fingerabdruckscan-Vorrichtung, eine Venenscan-Vorrichtung oder eine Kamera, etwa zur Aufnahme der Iris, sein.

Die mindestens eine Ausgabevorrichtung kann beispielsweise durch eine elektronische Anzeigevorrichtung (Display), einen Lautsprecher oder einen Vibrationsgeber gebildet sein. Die elektronische Anzeigevorrichtung weist ein optisches Anzeigeelement auf, das zur visuellen Darstellung, vorzugsweise von individualisierenden/personenbezogenen Daten, dient. Die Anzeigevorrichtung kann vorzugsweise bistabil ausgeführt sein, sodass sie im stromlosen Zustand ihre Information behält. Derartige Anzeigen sind in einer bevorzugten Weiterbildung der vorliegenden Erfindung als elektrophoretische, ferroelektrische oder cholesterische Flüssigkristall-Anzeigen ausgebildet. Dadurch können individualisierende/ personalisierende Daten dauerhaft angezeigt werden. Beispielsweise kann diese Vorrichtung zur Personalisierung des Wert- oder Sicherheitsdokuments mittels des Personenportraits und des Namens des Dokumenteninhabers eingesetzt werden. In diesem Falle ist eine zusätzliche optische Personalisierung durch personalisierende Drucke nicht mehr erforderlich. Das elektronische Anzeigeelement kann auch durch ein passives oder aktives, selbstleuchtendes Anzeigesystem auf der Basis von OLED-Elementen gebildet sein. Im Falle von aktiven OLED-Elementen wird die Anzeige unter Zuhilfenahme eines Lesegeräts oder über eine eingebaute Energiequelle aktiviert, wodurch die Darstellung dann visuell erkennbar wird. Das Anzeigeelement wird vorzugsweise über einen Anzeigentreiber-IC betrieben. Die Anzeigevorrichtung kann auf einem separaten Anzeigeträger montiert sein, der seinerseits auf der Schaltungsträgerlage montiert ist. Die Anzeigevorrichtung weist vorzugsweise randseitig Kontaktstellen auf, über die die Anzeigevorrichtung mit den Leiterbahnen auf der Schaltungsträgerlage elektrisch verbunden ist.

Die mindestens eine Eingabevorrichtung, beispielsweise der biometrische Sensor, kann elektrisch mit einem zentralen Verarbeitungsprozessor-IC verbunden sein, der diesen steuert. Ferner kann eine Verbindung zu einem Krypto-Prozessor bestehen, auf dem Verschlüsselungsalgorithmen gespeichert sein können. Der zentrale Prozessor-IC ist vorzugsweise elektrisch mit der mindestens einen Ausgabevorrichtung, beispielsweise einer elektronischen Anzeigevorrichtung, verbunden.

Das Wert- oder Sicherheitsdokument ist vorzugsweise nicht mit einer Energiequelle, beispielsweise einer Batterie, ausgerüstet sondern mit einer kontaktlosen Energieversorgung. Damit wird gewährleistet, dass das Dokument über einen sehr langen Zeitraum funktionsbereit gehalten werden kann. Denn die Verwendung einer Batterie limitiert die Verwendbarkeitsdauer des Dokuments auf ein oder zwei Jahre. Die für den Betrieb der elektronischen Bauelemente, insbesondere der mindestens einen Ausgabevorrichtung, beispielsweise einer Anzeigevorrichtung, erforderliche elektrische Energie kann von einem Schreib-/Lesegerät über die RFID-Antenne des Dokuments eingespeist werden.

Das Wert- oder Sicherheitsdokument ist bevorzugt derart ausgebildet, dass es sowohl von Rechts- als auch von Linkshändern bequem benutzt werden kann. Hierzu enthält es Eingabevorrichtungen, beispielsweise biometrische Sensoren, und/oder Ausgabevorrichtungen, beispielsweise Anzeigevorrichtungen, an beiden Seiten des Dokuments. Ferner kann zu diesem Zweck auch die mindestens eine Anzeige-Lichtquelle, beispielsweise LED, derart in das Wert- oder Sicherheitsdokument integriert sein, dass deren Signalisierung von beiden Seiten des Dokuments erkennbar ist und damit unabhängig von der Orientierung des Dokuments, mit der der Nutzer das Dokument hält, d.h. mit der linken oder der rechten Hand. Dies ermöglicht gegebenenfalls auch die weitere Benutzungsvariante, dass der Nutzer anstelle des Daumens den besser geeigneten Zeigefinger benutzt und das Dokument daher in einer seitenvertauschten Orientierung verwendet. Eine weitere Konfiguration mit beidseitig vorgesehenen Fingerabdrucksensoren ermöglicht auch eine gleichzeitige Authentifizierung mittels Zeigefinger und Daumen, wenn das Dokument zwischen diesen beiden Fingern gehalten wird.

Die Dokumentenrohlinge werden vorzugsweise in Form von Mehrfachnutzen hergestellt, wenngleich eine Herstellung grundsätzlich natürlich auch in Form von Einfachnutzen möglich ist. Die Mehrfachnutzen werden aus entsprechenden Mehrfachnutzen von Schaltungsträgerlagen, Mehrfachnutzen von Ausgleichslagen, Mehrfachnutzen von Decklagen und gegebenenfalls Mehrfachnutzen weiterer Dokumentenlagen erzeugt, indem die Mehrfachnutzen der einzelnen Lagen gestapelt und dann miteinander verbunden, vorzugsweise laminiert, werden. Die erhaltenen Mehrfachnutzen der Laminate werden dann in Dokumenten-Einfachnutzen vereinzelt, beispielsweise mit einem Stanz-, Fräs- oder Laserschneidverfahren, mit dem die zweidimensionale Gestalt der Dokumentenrohlinge erzeugt werden kann. Die Außenseiten der Dokumentenrohlinge können auch abschließend poliert/planarisiert werden, um glatte Oberflächen zu erzeugen. Gegebenenfalls können außenseitig (ein- oder beidseitig, vollflächig oder nur auf Teilflächen) Beschichtungen für eine anschließende Bedruckung aufgebracht werden. Derartige Beschichtungen können aus Materialien gebildet sein, die in der Kartentechnologie für die Kunststofflagen üblich sind, beispielsweise aus Polycarbonat, Polyethylenterephthalat, Polyvinylchlorid, Polyurethan und dergleichen. Derartige Materialien können insbesondere derart ausgebildet sein, dass bei der Berührung keine Fingerabdrücke auf der Oberfläche haften bleiben. Hierzu können diese Beschichtungen vorzugsweise matt ausgeführt sein.

Für die Durchführung des Fügeverfahrens kann bevorzugt eine herkömmliche Laminiervorrichtung verwendet werden, nachdem die einzelnen Lagen in einem Stapel zusammengetragen worden sind. Das Laminierverfahren weist typischerweise einen Warmund einen Kaltzyklus auf. Hierzu kann die Laminiervorrichtung eine herkömmliche Heiß/Kalt-Laminierpresse sein, die entweder einen Betrieb im Batch- oder Durchlaufverfahren ermöglicht.

Der montierte und gefügte Rohling des Wert- oder Sicherheitsdokuments enthält die vorstehend beschriebenen Dokumentenlagen in dem gefügten Zustand, wobei aneinander angrenzende Lagen nicht mehr als solche erkennbar sind sondern nur noch als monolithischer Lagenblock. Dagegen sind die Fasern der Faserverbundmaterialien auch nach dem Laminieren noch erkennbar. Zwischen den Lagen und in der Umgebung der elektronischen Bauelemente sind vorzugsweise keine Hohlräume vorhanden. Ursprünglich vorhandene Hohlräume werden beim Fügeprozess vorzugsweise durch die miteinander gefügten Materialien gefüllt. Ursprünglich in der Umgebung der elektronischen Bauelemente vorhandene Hohlräume können mit einem zusätzlich zu den Dokumentenlagen verwendeten Polymermaterial ausgefüllt sein, das bei einem Schnitt durch das Dokument ebenfalls separat erkennbar sein kann.

Nach der Erzeugung der Dokumentenrohlinge wird das Wert- oder Sicherheitsdokument aus diesen durch Individualisierung hergestellt. Hierzu werden die Individualisierungsdaten mittels einer RFID-Lese-/Schreibvorrichtung in den Dokumentenrohling, dort in den RFID-Chip, eingelesen und in diesem gespeichert (elektronische Individualisierung) sowie gegebenenfalls auf der Anzeigevorrichtung angezeigt oder von einer anderen Ausgabevorrichtung ausgegeben. Wenn eine elektrophoretische, ferroelektrische oder cholesterische Anzeigevorrichtung verwendet wird, kann diese Anzeige dauerhaft sein, sodass auf weitere Individualisierungsschritte, beispielsweise durch Bedrucken des Dokumentenrohlings, verzichtet werden kann. Eine elektrophoretische Anzeigevorrichtung eignet sich nämlich für eine dauerhafte Anzeige von sichtbaren Informationen auch im stromlosen Zustand. Ferner kann durch Bedrucken eine graphische Gestaltung und Individualisierung des Dokumentenrohlings erfolgen, zum Beispiel mittels Inkjet-Digitaldruck oder im Retransfer- oder Thermotransferdruckverfahren oder durch Laser-Einschreiben in eine innenliegende lasersensitive Dokumentenebene (optische Individualisierung: beispielsweise Lichtbild des Dokumenteninhabers sowie Personeninformation und Informationen des Unternehmens, dem der Inhaber angehört). In diesem Falle kann eine äußere Bedruckung durch einen abschließend aufgebrachten Schutzlack oder eine Schutzfolie geschützt werden. Ansonsten kommt für eine graphische Gestaltung der Außenseiten des Dokuments die Einlage der graphisch gestalteten Deck- und Abschlusslagen in Betracht, die, wie weiter oben beschrieben, oberhalb bzw. unterhalb des Lagenstapels aus Schaltungsträgerlage und Ausgleichslage(n) in dem zu laminierenden Lagenstapel angeordnet sind.

Das erfindungsgemäße Wert- oder Sicherheitsdokument kann zusätzlich zu den beschriebenen Sicherheitselementen und -merkmalen weitere Sicherheitsmerkmale aufweisen, die entweder individualisierend oder nicht individualisierend sind. Als weitere Sicherheitsmerkmale kommen Melierfasern, Guillochen, Wasserzeichen, Prägedrucke, Sicherheitsfäden, Mikroschrift, Kippbilder, Hologramme, optisch variable Pigmente, lumineszierende Farben, Durchlichtpasser, Oberflächenstrukturen und dergleichen in Betracht.

Zur näheren Veranschaulichung der vorliegenden Erfindung dienen die nachfolgend beschriebenen Figuren, anhand derer die Erfindung exemplarisch mit Ausführungsbeispielen erläutert wird.
- Fig. 1: zeigt eine isometrische schematische Darstellung einer möglichen Gestaltung eines Rohlings eines Wert- oder Sicherheitsdokuments, einer ID-Karte, in einer ersten Ausführungsvariante der elektrischen Schaltung;
- Fig. 2: zeigt schematische Querschnittsansichten eines Dokumentenrohlings eines Wert- oder Sicherheitsdokuments in einer zweiten Ausführungsvariante der elektrischen Schaltung; (A) vor dem Fügevorgang; (B) nach dem Fügevorgang;
- Fig. 3: zeigt schematische Ansichten von Dokumentenlagen des erfindungsgemäßen Wert- oder Sicherheitsdokuments in der ersten Ausführungsvariante der elektrischen Schaltung gemäß Fig. 1 in beispielhaften Ausführungen; (A) Decklage; (B) Ausgleichslage; (C) Schaltungsträgerlage mit darauf befindlicher elektrischer Schaltung; (D) Abschlusslage;
- Fig. 4: zeigt schematische isometrische Darstellungen (A) der Schaltungsträgerlage und (B) der Ausgleichslage in der ersten Ausführungsvariante der elektrischen Schaltung gemäß Fig. 1;
- Fig. 5: zeigt eine schematische Draufsicht auf die Sensorseite eines Wert- oder Sicherheitsdokuments in der zweiten Ausführungsvariante der elektrischen Schaltung gemäß Fig. 2 in einer ersten Ausführungsform;
- Fig. 6: zeigt eine schematische Draufsicht auf die Personalisierungsseite eines Wert- oder Sicherheitsdokuments in der zweiten Ausführungsvariante der elektrischen Schaltung gemäß Fig. 2 in der ersten Ausführungsform gemäß Fig. 5;
- Fig. 7: zeigt eine schematische Draufsicht auf die Sensorseite eines Wert- oder Sicherheitsdokuments in der zweiten Ausführungsvariante der elektrischen Schaltung gemäß Fig. 2 in einer zweiten Ausführungsform;
- Fig. 8: zeigt eine schematische Draufsicht auf die Personalisierungsseite eines Wert- oder Sicherheitsdokuments in der zweiten Ausführungsvariante der elektrischen Schaltung gemäß Fig. 2 in der zweiten Ausführungsform gemäß Fig. 7;
- Fig. 9: zeigt ein Blockschema mit den elektronischen Komponenten eines multifunktionalen Wert- oder Sicherheitsdokuments und mit einem Lese/Schreibgerät;
- Fig. 10: Ablaufschema des erfindungsgemäßen Verfahrens.

In den Figuren bezeichnen gleiche Bezugszeichen gleiche Elemente oder Elemente mit derselben Funktion. Die Figuren zeigen die Gegenstände nicht in jedem Falle maßstäblich zueinander. Ferner sind auch die Größenverhältnisse einzelner Elemente zu denen anderer in einer Figur oder zwischen den Figuren nicht in jedem Falle maßstäblich zueinander dargestellt.

Soweit nachfolgend eine ID-Karte 2000 und ein ID-Kartenrohling 1000 beschrieben werden, bezieht sich diese Beschreibung auf jegliches Wert- oder Sicherheitsdokument bzw. einen dazugehörigen Rohling in entsprechender Weise.

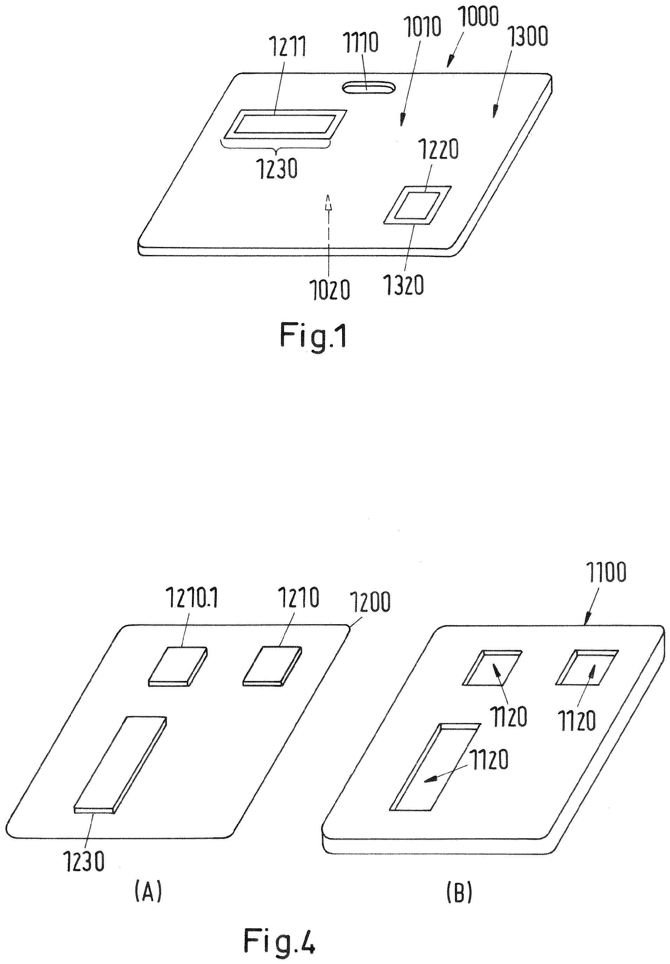

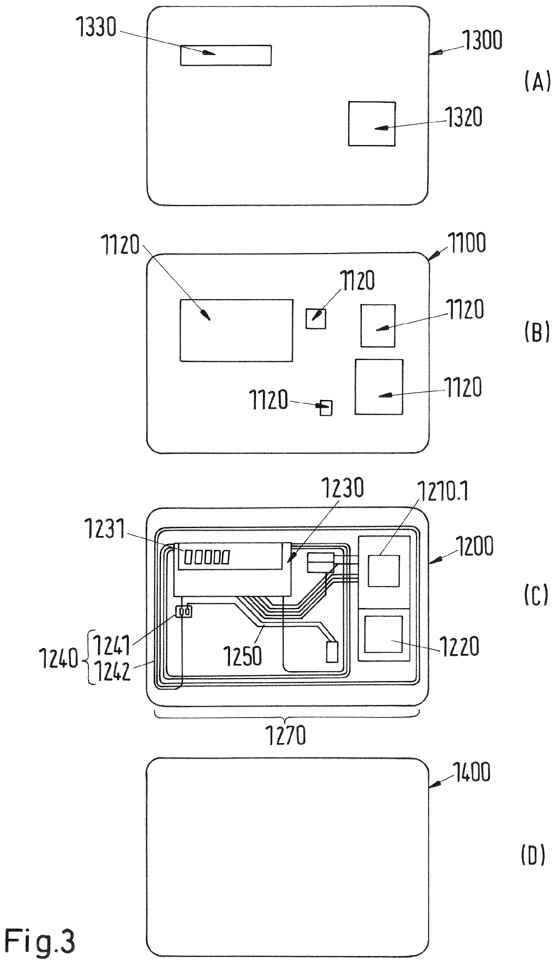

Der in Fig. 1 dargestellte ID-Kartenrohling 1000 mit einer oberen Sichtseite 1010 und einer unteren Sichtseite 1020 weist zumindest ein Anzeigeelement 1231 einer Anzeigevorrichtung 1230 (Fig. 3C) und einen biometrischen Sensor 1220, beispielsweise in Form einer Fingerabdruckscan-Vorrichtung oder einer Venenscan-Vorrichtung, auf. Der biometrische Sensor liegt durch eine Durchbrechung 1320 in der oben liegenden Decklage 1300 frei. Von außen nicht sichtbar ist eine RFID-Schaltung 1240 (Fig. 3C), bestehend aus einem RFID-Chip 1241 und einer RFID-Antenne 1242. Außerdem sind unter der Decklage weitere Schaltungsbestandteile und Bauelemente 1210 angeordnet, beispielsweise ein zentraler Prozessor 1210.1, die von außen nicht erkennbar sind. Alle elektronischen Bauelemente und Leiterbahnen bilden zusammen eine elektrische Schaltung 1270 (Fig. 3C). Eine Schaltungsträgerlage 1200 mit der elektrischen Schaltung und eine Ausgleichslage 1100 sind auch in Fig. 4 gezeigt.

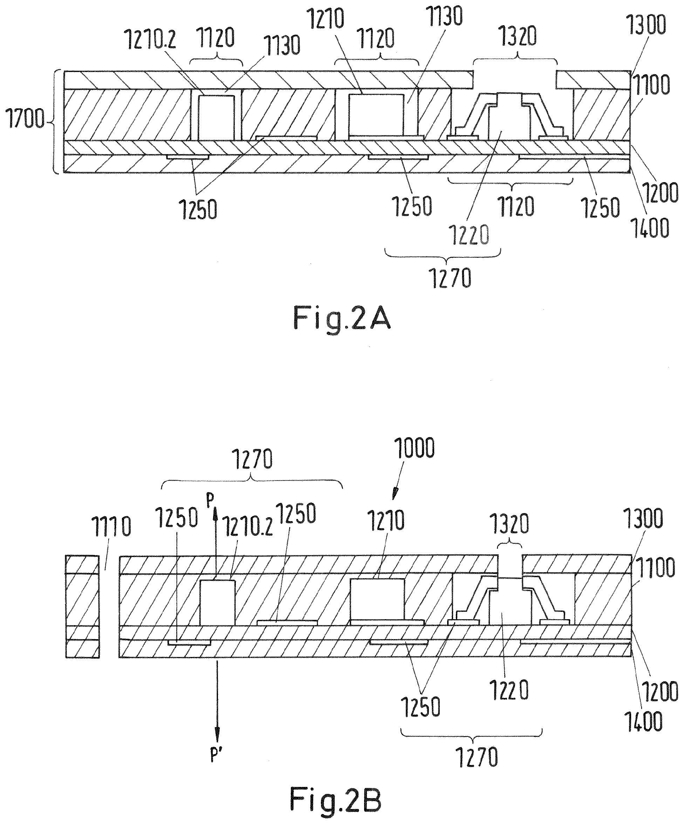

In Fig. 2 ist der Rohling der erfindungsgemäßen ID-Karte vor dem Fügevorgang (Fig. 2A) und danach (Fig. 2B) gezeigt. In Fig. 4 sind die Schaltungsträgerlage (Fig. 4A) und die Ausgleichslage (Fig. 4B) zudem in isometrischer Darstellung in beispielhaften Ausführungen gezeigt.

Fig. 2A zeigt die Dokumentenlagen 1100, 1200, 1300, 1400, die vor dem Fügevorgang zu einem Dokumentenstapel 1700 zusammengetragen sind: eine Schaltungsträgerlage1200 mit einer elektrischen Schaltung 1270, eine Ausgleichslage 1100 mit Durchbrechungen 1120, eine Decklage 1300 mit einer Durchbrechung 1320 und eine unten liegende Abschlusslage 1400. Diese vier Lagen sind sämtlich aus einem Faserverbundmaterial gebildet, vorzugsweise aus einem nicht schmelzenden Material, beispielsweise aus FR4-Material. Hierzu werden Glasfasermatten mit einem Epoxidharz getränkt und getrocknet, wobei Prepregs entstehen. In diesen Prepregs ist das Harz noch nicht durchgehärtet (vernetzt). Es befindet sich im B-Zustand (B stage). Unterschiedliche Dicken der einzelnen Lagen können entweder durch Glasfasermatten mit unterschiedlichen Faserstärken oder durch Aufeinanderlegen mehrerer Prepregs erzeugt werden. Die Prepregs sind vorzugsweise transparent oder zumindest transluzent. Wegen der Anwesenheit der Glasfasermatten in den Prepregs sind diese gegebenenfalls lediglich durchscheinend (transluzent). Die Transparenz oder Transluzenz des fertig laminierten ID-Kartenrohlings 1000 bzw. der ID-Karte 2000 hängt allerdings von den jeweiligen Brechungsindices der Materialien ab: Ist der Brechungsindex der in dem Material enthaltenen Fasern ungefähr (± 0,1) genauso groß wie der Brechungsindex des gehärteten Harzes, in das die Fasern eingebettet sind, sind die Fasern nicht mehr ohne weiteres visuell erkennbar, sodass das Material mangels Lichtbrechung transparent ist. Andernfalls ist von Transluzenz auszugehen. Jedenfalls ist dadurch Licht von einer in die ID-Karte einlaminierten Lichtquelle (LED 1210.2) von beiden Seiten der Karte sichtbar (siehe Pfeile P, P' in Fig. 2B). Außerdem ist dadurch auch ein in die Karte einlaminiertes Anzeigeelement 1231 (Fig. 3C) von außen erkennbar, sodass die Anzeige von außen abgelesen werden kann. Die Lichtquellen können ringförmig um den Sensor angeordnet sein oder an der Seite, um den Dokumentenrand zum Leuchten zu bringen.

Die Ausgleichslage 1100 befindet sich an der Seite der Schaltungsträgerlage 1200, an der auf dieser elektronische Bauelemente 1210, 1220 montiert sind. Auf der anderen Seite der Schaltungsträgerlage liegt eine Abschlusslage 1400 an der Schaltungsträgerlage an. Nach oben hin schließt die Decklage den Stapel 1700 ab und verschließt die in der Ausgleichslage befindlichen Durchbrechungen 1120 (mit Ausnahme der Durchbrechung, durch die ein Fingerabdrucksensor 1220 oder eine Kamera nach außen hin freiliegt).

In der Ausgleichslage 1100 und in der Decklage 1300 sind Durchbrechungen 1120, 1320 enthalten, die beispielsweise durch Ausstanzen von Löchern in die Prepregs erzeugt worden sind. Die Durchbrechungen 1120 in der Ausgleichslage sind an den Stellen erzeugt, an denen sich in dem zusammengetragenen Stapel 1700 darunter elektronische Bauelemente 1210, 1220 auf der Schaltungsträgerlage1200 befinden. Dadurch können diese Bauelemente beim Zusammentragen der Lagen in diese Durchbrechungen hineinragen. Vorzugsweise entspricht die Dicke der Ausgleichslage ungefähr der Höhe der Bauelemente über der Schaltungsträgerlage, sodass die Bauelemente ungefähr mit der Oberfläche der Ausgleichslage bündig abschließen, die der Schaltungsträgerlage gegenüber liegt. Jedenfalls sollen die Bauelemente nicht über diese Oberfläche hinausragen, damit sie sich vollständig innerhalb der Durchbrechungen befinden (Fig. 2A). Etwaige Hohlräume 1130, die sich im assemblierten Zustand zwischen den elektronischen Bauelementen und der Ausgleichslage ausbilden, weil die Durchbrechungen größer ausgebildet sind als die Bauelemente, können nach dem Assemblieren dieser beiden Dokumentenlagen mit einem Polymer ausgefüllt werden, beispielsweise mit einem thermoplastischen Polymer (nicht dargestellt), das im gebrauchsfertigen Zustand noch elastisch ist und daher Scherbelastungen abfangen kann. Alternativ fließt das Harzmaterial unter dem beim Laminieren angewendeten Druck in diese Hohlräume. Durch diesen Aufbau werden die elektronischen Bauelemente gegen äußere mechanische Einflüsse geschützt. Dieses Polymer ist vorzugsweise transparent, insbesondere zur Einbettung einer Anzeige-Lichtquelle (LED) 1210.2 und des Anzeigeelements 1231 (nicht dargestellt), damit deren Anzeigen von außen erkennbar sind.

Die Durchbrechung 1320 in der Decklage 1300 befindet sich an der Stelle, an der ein biometrischer Sensor 1220 auf der Schaltungsträgerlage1200 angeordnet ist, sofern dieser nach außen hin freiliegen muss, um seine Funktion zu erfüllen, beispielsweise ein Fingerabdrucksensor oder eine Kamera.

Die Schaltungsträgerlage 1200 weist an ihren beiden Seiten Verdrahtungsmuster 1240, 1250 auf. Außerdem können sich in inneren Ebenen in der Schaltungsträgerlage ebenfalls Verdrahtungsmuster befinden (Mehrlagen-Leiterplatte). Außerdem sind auf einer Seite der Schaltungsträgerlage elektronische Bauelemente 1210, 1210.2, 1220, 1241 montiert, d.h. darauf aufgeklebt und elektronisch mit dem Verdrahtungsmuster verbunden. Es handelt sich um mindestens eine Anzeige-Lichtquelle 1210.2, beispielsweise LEDs, insbesondere eine rot und eine grün leuchtende LED, ferner um einen biometrischen Sensor 1220, beispielsweise um einen Fingerabdrucksensor, sowie um ein weiteres elektronisches Bauelement, beispielsweise um einen RFID-Chip 1241 (in Fig. 2A, 2B nicht dargestellt).

Die Ausführungsvarianten für die elektrische Schaltung, die in Fig. 1 bis 4 gezeigt sind, unterscheiden sich, wobei aber elektronische Bauelemente der einen Ausführungsvariante auch in der anderen Ausführungsvariante enthalten sein können, auch wenn sie in den Figuren nicht dargestellt sind.

Nach dem Zusammentragen der genannten Kartenlagen 1100, 1200, 1300, 1400 zu einem Stapel 1700 und Ausrichten der Lagen in dem Stapel zueinander wird der Stapel in einer Laminierpresse platziert. Der Stapel wird darin zu einem Lagenverbund laminiert, indem Druck auf den Stapel ausgeübt und dieser dabei erhitzt wird. Dabei fließt das Harz der Prepregs, das Harz der aneinander anliegenden Lagen verbindet sich, und es härtet aus. Durch den Druck werden Hohlräume 1130 in den Durchbrechungen 1120 im Bereich der elektronischen Bauelemente 1210, 1210.2, 1220, 1241 mit dem Harz ausgefüllt, sodass die Bauelemente von dem ausgehärteten Harz vollkommen umschlossen werden. Lediglich im Bereich des biometrischen Sensors 1220 verbleibt eine Öffnung nach oben, sodass der Sensor nach außen hin freiliegt. Schließlich erhält der ID-Kartenrohling 1000 auch ein Langloch 1110 für ein Lanyard in einem Randbereich des Rohlings. Dieses Langloch wird beispielsweise durch Stanzen oder Fräsen eingebracht.

Der durch Laminieren erzeugte ID-Kartenrohling 1000 bildet einen monolithischen Körper aus. Die ursprünglich vorhandenen Einzellagen 1100, 1200, 1300, 1400 sind nach dem Laminieren nicht mehr zu erkennen, da die Harzbereiche ohne Ausbildung einer Grenzfläche miteinander verschmolzen sind. Lediglich in einem Querschnitt, herstellbar durch einen Querschliff sind die einzelnen Lagen indirekt noch anhand der in ihnen enthaltenen Glasfasermatten oder anderen Fasern erkennbar, ohne dass jedoch deren ursprüngliche Begrenzungen rekonstruierbar wären. Die in Fig. 2B gezeigten Begrenzungen der Einzellagen dienen lediglich der Veranschaulichung.

Die Einzellagen 1100, 1200, 1300, 1400 können zunächst in Mehrfachnutzen mit beispielsweise 5 mal 6 Einzelnutzen eingesetzt werden (in den Zeichnungen nicht dargestellt). Beim Laminieren entsteht damit ein Mehrfachnutzen von beispielsweise 5 mal 6 Rohlingen 1000. Die Rohlinge können beispielsweise durch Stanzen oder Fräsen aus dem Mehrfachnutzen-Laminat vereinzelt (ausgeschnitten) werden.

Dadurch dass die Prepregs, die zur Bildung der Lagen 1100, 1200, 1300, 1400 eingesetzt worden sind, transparent oder transluzent sind, ist eine von der Anzeige-Lichtquelle 1210.2 ausgehende Signalisierung von beiden Seiten des Rohlings 1000 / der ID-Karte 2000 erkennbar (siehe Pfeile P, P'). Die Anzeige-Lichtquelle kann beispielsweise den Status anzeigen, etwa mit grünem Licht signalisieren, dass der Finger mit dem Fingerabdrucksensor 1220 erkannt wurde, oder mit rotem Licht signalisieren, dass der Finger nicht erkannt wurde. Dadurch dass die Signalisierung aufgrund der Transparenz oder Transluzenz des darüber liegenden Materials von beiden Seiten des Rohlings / der ID-Karte sichtbar ist, ist eine komfortable Nutzerführung für Links- und Rechtshänder möglich. Des Weiteren kann mit dieser Displayvariante auch eine Benutzerinformation stattfinden, wenn der Nutzer den biometrisch besser geeigneten Zeigefinger auf den Sensor legt. In diesem Fall kann er die ID-Karte zwischen dem Daumen und dem Zeigefinger halten und beispielsweise bequem einhändig eine Türöffnung initiieren.

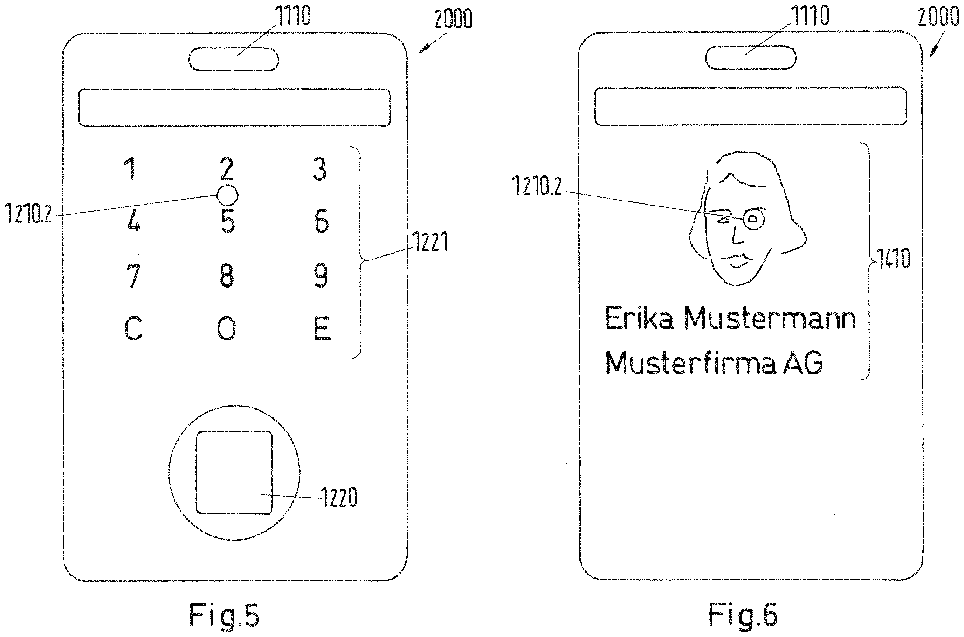

Eine aus dem in der Querschnittsansicht von Fig. 2 gezeigten ID-Kartenrohling 1000 hergestellte ID-Karte 2000 ist von der Sensorseite gesehen in Fig. 5 und von der Personalisierungsseite gesehen in Fig. 6 gezeigt. Diese ID-Karte weist auf der Sensorseite einen Fingerabdrucksensor 1220 und ein kapazitives PIN-Pad 1221 auf. Auf der Personalisierungsseite weist die Karte einen Personalisierungsdruck 1410 auf. Außerdem ist das Leuchten einer LED 1210.2 von beiden Seiten erkennbar.

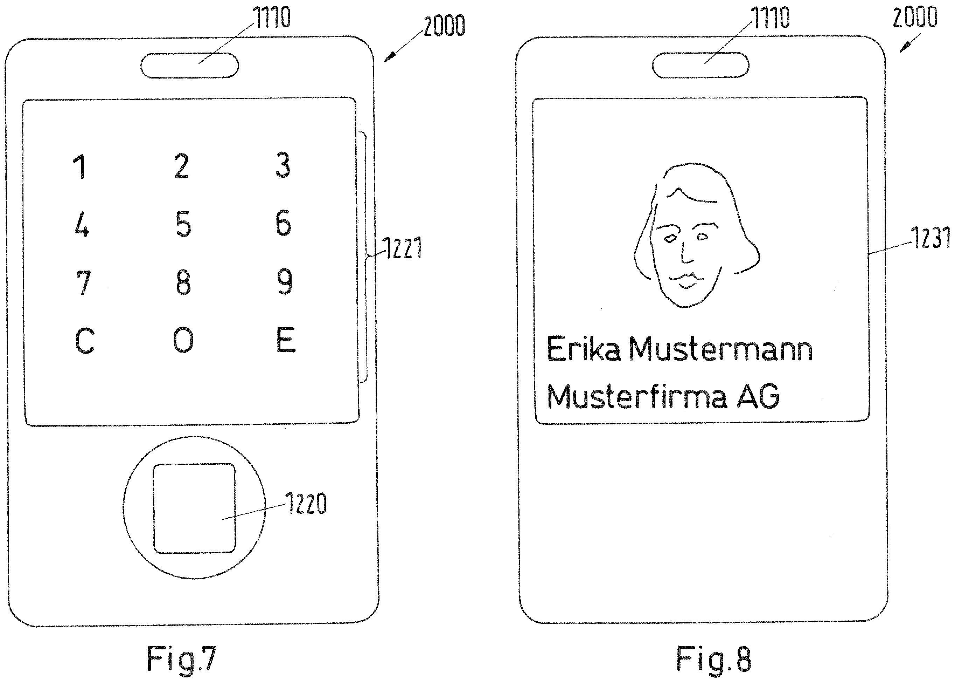

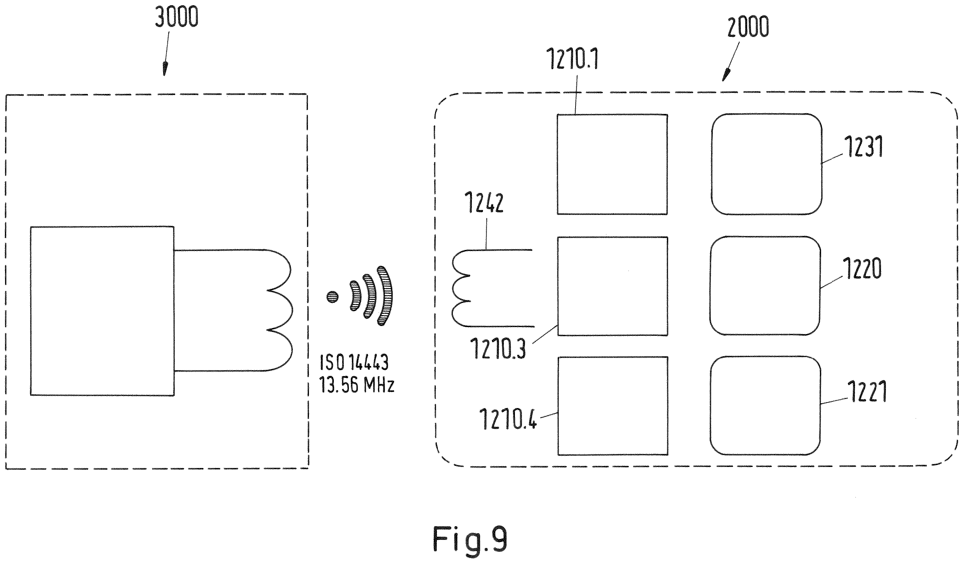

Ferner ist eine ID-Karte 2000 in einer zweiten Ausführungsform von der Sensorseite gesehen in Fig. 7 und von der Personalisierungsseite gesehen in Fig. 8 gezeigt. Diese ID-Karte weist auf der Sensorseite einen Fingerabdrucksensor 1220 und ein Touchdisplay 1221 und auf der Personalisierungsseite ein Personalisierungsdisplay 1231 auf. Dieses Display kann in Form eines bistabilen elektronischen Anzeigeelements ausgebildet sein, vorzugsweise in Form einer elektrophoretischen, ferroelektrischen oder cholesterischen Flüssigkristall-Anzeige, sodass sie im stromlosen Zustand ihre Information behält. Die Personalisierungsdaten für die Personalisierung dieser Karte werden mittels eines Lese- /Schreibgerätes 3000 (Fig. 9) in den Speicher des Rohlings 1000 bzw. die ID-Karte 2000 eingelesen und dann auf dem Display angezeigt.

Die in einer ID-Karte 2000 enthaltenen elektronischen Bauelemente 1210 sind in Fig. 9 dargestellt: Die elektrische Schaltung 1270 der Karte umfasst einen zentralen Prozessor 1210.1, einen Power Management-Prozessor 1210.3, einen Krypto-Prozessor 1210.4, eine Eingabevorrichtung, beispielsweise ein PIN-Pad 1221, und einen biometrischen Sensor 1220, wie einen Fingerabdrucksensor, und eine Ausgabevorrichtung, beispielsweise ein Personalisierungsdisplay 1231. Die RFID-Schaltung 1240 wird zum einen durch den zentralen Prozessor und zum anderen durch die RFID-Antenne 1242 gebildet.

Für einen Lese-/Schreibvorgang wird der Rohling 1000 bzw. die ID-Karte 2000 in die Nähe einer Lese-/Schreibvorrichtung 3000 gebracht, sodass eine kontaktlose Kommunikation gemäß ISO 14443 in der am Prioritätstag der vorliegenden Anmeldung gültigen Fassung zwischen dieser Vorrichtung und der ID-Karte stattfinden kann (Übertragung beispielsweise bei einer Frequenz von 13,56 MHz).

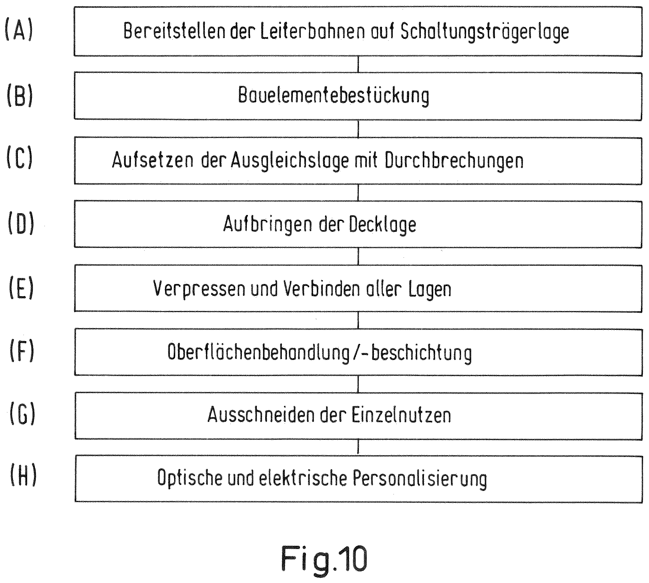

Zur Herstellung der ID-Karte wird wie folgt vorgegangen (Fig. 10):
Zunächst werden elektrische Schaltungen 1270 auf einem Mehrfachnutzen von Schaltungsträgerlagen 1200 (in den Figuren nicht dargestellt) hergestellt (Verfahrensschritt (A)). Hierzu wird mindestens ein Prepreg in einer Laminiervorrichtung zu einem Laminat verarbeitet, indem das mindestens eine Prepreg zusammen mit Kupferfolien (einseitig oder beidseitig) unter flächiger Druckanwendung und unter Einbringung von Wärme gehärtet wird. Darauf werden mit Leiterplattentechnologien Leiterbahnen 1240, 1250 erzeugt. Falls beidseitig Verdrahtungen erzeugt werden sollen, sind zunächst Durchgangslöcher in das Laminat einzubringen und diese Löcher zu metallisieren. Hierzu können ebenfalls die in der Leiterplattentechnologie üblichen Verfahren angewendet werden. Falls die Schaltungsträgerlagen in Form von Mehrlagenschaltungen vorliegen sollen, sind mehrere derartiger Lagen mit dazwischen angeordneten Prepregs sowie außenliegenden Kupferfolien, die über weitere Prepregs mit dem bestehenden Laminat flächig in Kontakt gebracht werden, zu laminieren und das entstehende Laminat wiederum einem Laminierverfahren zu unterwerfen. Die Bedingungen der vorstehend genannten Laminierverfahren richten sich nach der Art des Harzes und sind auf dem Gebiet der Leiterplattentechnologie allgemein bekannt.

Die derart hergestellten Schaltungsträgerlagen 1200 im Mehrfachnutzen mit darauf und gegebenenfalls in innenliegenden Ebenen liegenden Verdrahtungen 1240, 1250 werden dann mit elektronischen Bauelementen 1210 bestückt (Verfahrensschritt (B)). Hierzu kommen übliche Bestückungsverfahren zur Anwendung, vorzugsweise Lötverfahren, gegebenenfalls auch Bondverfahren. Die Bauelemente können gehäust oder ungehäust montiert werden. Vorzugsweise sind sie ungehäust.

Im Fall von ungehäusten Bauelementen können auch, anders als in Fig. 10 dargestellt, zunächst die Schaltungslagen mit Bauelementen und Ausgleichslagen aufeinander gestapelt und miteinander verpresst werden und anschließend die Leiterbahnen durch Laserbohren von Sacklöchern zu den Bauelementeanschlüssen und Galvanisieren und Strukturieren elektrischer Verbindungen zwischen den Bauelementen geschaffen werden.

Mindestens ein Mehrfachnutzen von Ausgleichslagen 1100 wird bereitgestellt und mit dem Mehrfachnutzen der Schaltungslagen zu einem Stapel zusammengetragen (Verfahrensschritt (C)), der aus einem Prepreg mit den darauf gebildeten elektrischen Schaltungen 1270 gebildet wird. Hierzu werden Durchbrechungen 1120 und/oder Ausnehmungen an den Stellen, an denen sich die elektronischen Bauelemente 1210 auf den Schaltungsträgerlagen 1200 befinden, in die Ausgleichslagen eingebracht, beispielsweise durch Stanzen, Fräsen oder mit einem Laserabtragsverfahren. Falls sich elektronische Bauelemente nur an einer Seite des Mehrfachnutzens der Schaltungsträgerlage befinden, ist nur ein Mehrfachnutzen der Ausgleichslagen an dieser Seite anzuordnen. Falls sich dagegen Bauelemente an beiden Seiten des Mehrfachnutzens der Schaltungsträgerlagen befinden, sind Mehrfachnutzen von Ausgleichslagen an beiden Seiten anzuordnen.

Ferner ist mindestens ein Mehrfachnutzen von Decklagen 1300 bereitzustellen und mit dem bereits bestehenden Stapel aus Schaltungslagen und Ausgleichslagen 1100 zusammenzutragen (Verfahrensschritt (D)), der ebenfalls aus einem Prepreg gebildet wird. Die Decklagen weisen ebenfalls dort Durchbrechungen 1320 auf, wo sich auf dem Mehrfachnutzen der Schaltungsträgerlagen elektronische Bauelemente 1210 befinden, sofern diese nach außen frei liegen sollen, beispielsweise für einen Sensor, wie eine Fingerabdrucksensorvorrichtung oder für eine Kamera.

Der mindestens eine Mehrfachnutzen der Ausgleichslagen 1100 wird an der/den Seite(n) des Mehrfachnutzens der Schaltungslagen angeordnet, an der/denen sich elektronische Bauelemente 1210 befinden. An der Seite des Mehrfachnutzens der Ausgleichslagen, der von dem Mehrfachnutzen der Schaltungslagen abgewandt ist, wird ferner jeweils ein Mehrfachnutzen von Decklagen 1300 angeordnet, sodass die Mehrfachnutzen der Decklagen flächig und unmittelbar in Kontakt an den Mehrfachnutzen der Ausgleichslagen und die Mehrfachnutzen der Ausgleichslagen flächig und unmittelbar in Kontakt an den Mehrfachnutzen der Schaltungslagen anliegen.

Gegebenenfalls werden noch Mehrfachnutzen von Abschlusslagen 1400 und - sofern erwünscht - auch Mehrfachnutzen von weiteren Kartenlagen bereitgestellt, die ebenfalls aus Prepregs gebildet werden und die auf den mindestens einen Mehrfachnutzenstapel 1700 der Kartenlagen aufgelegt werden, sodass sie an diesem flächig und unmittelbar in Kontakt anliegen (in Fig. 10 nicht berücksichtigt).

Danach wird der gebildete Mehrfachnutzenstapel 1700 in einer Laminieranlage laminiert (Verfahrensschritt (E)), indem flächiger Druck auf den Stapel ausgeübt und diesem Wärme zugeführt wird. Dadurch wird ein Mehrfachnutzen von Rohlingen 1000 der ID-Karte 2000 hergestellt.

Anschließend können die Außenseiten der Mehrfachnutzen veredelt werden, indem deren Außenseiten planarisiert werden, beispielsweise mit einem Polierverfahren (Verfahrensschritt (F)).

Ferner können Schutzlackschichten auf die Außenseiten der Rohlinge 1000 aufgebracht werden (Verfahrensschritt (F)), beispielsweise einen UV- oder thermisch härtenden Lack. Dieser Lack kann mit einem Siebdruckverfahren, Thermotransfer-Druckverfahren oder mit anderen Auftragstechniken, wie Roller-Coaten oder Vorhanggießen oder Sprühen oder Tauchen aufgebracht werden. Anstelle dieser Schutzlackschicht oder zusätzlich zu dieser kann auch eine lasersensitive Schicht, typischerweise aus Polycarbonat, aufgebracht werden, um eine Laserindividualisierung an den Rohlingen vornehmen zu können.

Die derart veredelten Außenseiten können anschließend mit einem Dekordruck versehen werden (Verfahrensschritt (F)).

Des Weiteren dient die Oberflächenbehandlung bzw. Beschichtung dazu, die nachträgliche optische Personalisierung zu erleichtern. Die Lackierung von Faserverbundwerkstoffen ist in der Regel aufwändig. Die Beschichtung dient bevorzugt als Haftvermittler zwischen der Faserverbundoberfläche sowie der anschließenden Druckschicht des Retransferdruckers. Als Materialien eignen sich Haftvermittler, insbesondere Kunststoffprimere, Silane oder TPU. Alternativ kann auch eine dünne Folie in den Stapel vor dem Verpressen eingelegt werden.

Aus den derart hergestellten Mehrfachnutzen der Rohlinge 1000 werden die einzelnen Rohlinge vereinzelt, beispielsweise durch Stanzen, Fräsen oder mit einem Laserabtragsverfahren (Verfahrensschritt (G)). Außerdem können mit den genannten Verfahrensarten bei diesem Bearbeitungsschritt (Lang-) Löcher für einen Lanyard ausgeschnitten werden.

Die vorstehenden Erläuterungen beziehen sich gleichermaßen auf das Herstellen und Verbinden von Einzelnutzen der jeweiligen Dokumentenlagen.

Nach dem Vereinzeln der Rohlinge 1000 werden diese zu den individualisierten ID-Karten 2000 weiterverarbeitet (Verfahrensschritt (H)). Hierzu kann zum einen ein individualisierender Druck (beispielsweise mittels Tintenstrahldruck oder Thermotransferdruck) aufgebracht werden. Anstelle eines Druckverfahrens oder zusätzlich zu diesem kann auch ein Laserindividualisierungsverfahren angewendet werden, bei dem die Individualisierungsdaten mit einem Laser in eine lasersensitive Schicht in dem Rohling eingeschrieben werden. Zum anderen können individualisierende Daten auch in den elektronischen Speicher (beispielsweise RFID-Chip 1241) der elektrischen Schaltung 1270 eingelesen und dort gespeichert werden. Falls der Rohling eine Anzeigevorrichtung 1230 mit dauerhafter Anzeige aufweist, können individualisierende Daten auf dem Anzeigeelement (Personalisierungsdisplay) 1231 dieser Vorrichtung dauerhaft angezeigt werden.

### Bezugszeichenliste:

- 1000: Rohling eines Wert- oder Sicherheitsdokuments, einer ID-Karte
- 1010: obere Sichtseite
- 1020: untere Sichtseite
- 1100: Ausgleichslage, zweite Dokumenten-/Kartenlage
- 1110: Langloch
- 1120: Durchbrechung in der Ausgleichslage
- 1130: Hohlraum
- 1200: Schaltungsträgerlage, erste Dokumenten-/Kartenlage
- 1210: elektronisches (Halbleiter-)Bauelement
- 1210.1: zentraler Prozessor
- 1210.2: Anzeige-Lichtquelle, LED
- 1210.3: Power Management-Prozessor
- 1210.4: Krypto-Prozessor
- 1220: (biometrische) Sensor(vorrichtung), Fingerabdruckscan-Vorrichtung, Venenscan-Vorrichtung
- 1221: kapazitives PIN-Pad
- 1230: Anzeigevorrichtung
- 1231: Anzeigeelement, (Personalisierungs-) Display
- 1240: RFID-Schaltung
- 1241: RFID-IC (-Chip)
- 1242: RFID-Antenne
- 1250: Verdrahtungsmuster, Leiterbahnen
- 1270: elektrische Schaltung
- 1300: Decklage, dritte Dokumenten-/Kartenlage
- 1310: Bedruckung
- 1320: Durchbrechung in der Decklage
- 1400: Abschlusslage, Dokumenten-/Kartenlage
- 1410: Bedruckung auf der Abschlusslage
- 1700: (Dokumentenlagen-/Mehrfachnutzen-) Stapel
- 2000: Wert- oder Sicherheitsdokument, ID-Karte
- 3000: Lese-/Schreibvorrichtung

## Patentansprüche

1. Wert- oder Sicherheitsdokument (2000) mit einer elektrischen Schaltung (1270), wobei das Wert- oder Sicherheitsdokument (2000) aus mindestens drei in einem Dokumentenlagenstapel (1700) angeordneten und mit einem Fügeverfahren flächig miteinander verbundenen Dokumentenlagen gebildet ist, von denen eine erste Dokumentenlage durch eine die elektrische Schaltung (1270) tragende Schaltungsträgerlage (1200), mindestens eine zweite Dokumentenlage durch jeweils eine mindestens eine Durchbrechung (1120) und/oder Ausnehmung aufweisende Ausgleichslage (1100) und mindestens eine dritte Dokumentenlage durch jeweils eine Decklage (1300) gebildet sind,
**dadurch gekennzeichnet, dass** die erste (1200) und die mindestens eine zweite (1100) und die mindestens eine dritte Dokumentenlage (1300) aus einem Faserverbundwerkstoff gebildet sind, der aus einem mit Glasfasergewebe verstärkten Duroplast auf Basis eines Epoxidharzes gebildet ist.

2. Wert- oder Sicherheitsdokument (2000) nach Anspruch 1, **dadurch gekennzeichnet, dass** der Faserverbundwerkstoff nicht schmelzend ist.

3. Wert- oder Sicherheitsdokument (2000) nach einem der vorstehenden Ansprüche, **dadurch gekennzeichnet, dass** die mindestens eine Decklage (1300) und die Schaltungsträgerlage (1200) transparent oder transluzent sind.

4. Wert- oder Sicherheitsdokument (2000) nach einem der vorstehenden Ansprüche, **dadurch gekennzeichnet, dass** Hohlräume (1130), die durch die mindestens eine Durchbrechung (1120) und/oder Ausnehmung in der mindestens einen Ausgleichslage (1100) und durch auf der Schaltungsträgerlage (1200) montierte elektronische Bauelemente (1210), die in die mindestens eine Durchbrechung (1120) oder Ausnehmung hineinragen, gebildet sind, mit einem Polymermaterial gefüllt sind.

5. Wert- oder Sicherheitsdokument (2000) nach einem der vorstehenden Ansprüche, **dadurch gekennzeichnet, dass** die mindestens eine Decklage (1300) eine Durchbrechung (1320) aufweist, sodass eine sich darin befindende Sensorvorrichtung (1220) nach außen hin freiliegt.

6. Wert- oder Sicherheitsdokument (2000) nach einem der vorstehenden Ansprüche, **dadurch gekennzeichnet, dass** die elektrische Schaltung (1270) eine RFID-Schaltung, eine biometrische Sensorvorrichtung (1220) und/oder eine elektronische Anzeigevorrichtung (1230) umfasst.

7. Wert- oder Sicherheitsdokument (2000) nach einem der vorstehenden Ansprüche, **dadurch gekennzeichnet, dass** das Wert- oder Sicherheitsdokument (2000) eine Anzeigevorrichtung (1230) mit einem elektrophoretischen, ferroelektrischen oder cholesterischen Anzeigeelement (1231) aufweist, das individualisierende Daten dauerhaft anzeigt.

8. Verfahren zum Herstellen eines Wert- oder Sicherheitsdokuments (2000), das eine elektrische Schaltung (1270) enthält, umfassend die folgenden Verfahrensschritte:
(a) Bereitstellen einer ersten Dokumentenlage in Form einer die elektrische Schaltung (1270) tragenden Schaltungsträgerlage (1200), mindestens einer zweiten Dokumentenlage in Form jeweils einer mindestens eine Durchbrechung (1120) und/oder Ausnehmung aufweisenden Ausgleichslage (1100) und mindestens einer dritten Dokumentenlage in Form jeweils einer Decklage (1300);
(b) Stapeln der ersten (1200) und der mindestens einen zweiten (1100) und der mindestens einen dritten Dokumentenlage(1300) zu einem Dokumentenlagenstapel (1700);
(c) Unlösbares Fügen, insbesondere mittels eines Laminierverfahrens, der ersten (1200) und der mindestens einen zweiten (1100) und der mindestens einen dritten Dokumentenlage (1300), wobei ein Dokumentenrohling (1000) entsteht; und
(d) Individualisieren des Dokumentenrohlings (1000), wobei das Wert- oder Sicherheitsdokument (2000) entsteht,
wobei die erste (1200) und die mindestens eine zweite (1100) und die mindestens eine dritte Dokumentenlage (1300) aus einem Faserverbundwerkstoff gebildet sind, der aus einem mit Glasfasergewebe verstärkten Duroplast auf Basis eines Epoxidharzes gebildet ist.

## Claims

1. Value or security document (2000) with an electric circuit (1270), wherein the value or security document (2000) is formed from at least three document layers which are arranged in a document layer stack (1700) and are connected together face-to-face by a joining method, of which a first document layer is formed from a circuit carrier layer (1200) which supports the electric circuit (1270), at least one second document layer is formed by a respective compensation layer (1100) which comprises at least one opening (1120) and/or recess, and at least one third document layer is formed by a respective cover layer (1300),
**characterised in that** the first (1200) and the at least one second (1100) and the at least one third document layer (1300) are formed from a fibre composite material, which is formed from a thermoset, reinforced with a glass fibre fabric and based on an epoxy resin.

2. Value or security document (2000) according to claim 1, **characterised in that** the fibre composite material is non-melting.

3. Value or security document (2000) according to any one of the preceding claims, **characterised in that** the at least one cover layer (1300) and the circuit carrier layer (1200) are transparent or translucent.

4. Value or security document (2000) according to any one of the preceding claims, **characterised in that** cavities (1130), which are formed by the at least one opening (1120) and/or recess in the at least one compensation layer (1100) and by electronic component elements (1210) which are mounted on the circuit carrier layer (1200) and which project into the at least one opening (1120) or recess, are filled with a polymer material.

5. Value or security document (2000) according to any one of the preceding claims, **characterised in that** the at least one cover layer (1300) comprises an opening (1320), such that a sensor device (1220) located in this is exposed to the outside.

6. Value or security document (2000) according to any one of the preceding claims, **characterised in that** the electric circuit (1270) comprises an RFID circuit, a biometric sensor device (1220), and/or an electronic display device (1230).

7. Value or security document (2000) according to any one of the preceding claims, **characterised in that** the value or security document (2000) comprises a display device (1230) with an electrophoretic, ferroelectric, or cholesteric display element (1231), which permanently displays individualising data.

8. Method for producing a value or security document (2000), which contains an electric circuit (1270), comprising the following method steps:
(a) providing a first document layer in the form of a circuit carrier layer (1200) which supports the electric circuit (1270), at least one second document layer in the form of a compensation layer (1100) which comprises at least one opening (1120) and/or recess, and at least one third document layer in the form of a respective cover layer (1300);
(b) Stacking the first (1200) and of the at least one second (1100) and of the at least one third (1300) document layer to form a document layer stack (1700);
(c) Indissoluble joining, in particular by means of a lamination method, of the first (1200) and of the at least one second (1100) and of the at least one third (1300) document layer (1300), wherein a document blank (1000) is produced; and
(d) Individualising the document blank (1000), wherein the value or security document (2000) comes into being,
wherein the first (1200) and of the at least one second (1100) and of the at least one third (1300) document layer are formed from a fibre composite material which is formed from a thermoset, reinforced with a glass fibre fabric and based on an epoxy resin.

## Revendications

1. Document de valeur ou de sécurité (2000) avec un circuit électrique (1270), dans lequel le document de valeur ou de sécurité (2000) est formé d'au moins trois couches de document raccordées entre elles à plat avec un procédé d'assemblage et agencées dans un empilement de couches de document (1700), dont une première couche de document est formée par une couche de support de circuit (1200) supportant le circuit électrique (1270), au moins une deuxième couche de document est formée par respectivement une couche d'égalisation (1100) présentant au moins une interruption (1120) et/ou un évidement et au moins une troisième couche de document est formée par respectivement une couche de recouvrement (1300), **caractérisé en ce que** la première (1200) et l'au moins une deuxième (1100) et l'au moins une troisième couche de document (1300) sont formées en un matériau composite fibreux qui est formé en duroplaste renforcé par un tissu de fibre de verre à base d'une résine époxy.

2. Document de valeur ou de sécurité (2000) selon la revendication 1, **caractérisé en ce que** le matériau composite fibreux n'est pas en fusion.

3. Document de valeur ou de sécurité (2000) selon l'une quelconque des revendications précédentes, **caractérisé en ce que** l'au moins une couche de recouvrement (1300) et la couche de support de circuit (1200) sont transparentes ou translucides.

4. Document de valeur ou de sécurité (2000) selon l'une quelconque des revendications précédentes, **caractérisé en ce que** des espaces creux (1130) qui sont formés par l'au moins une interruption (1120) et/ou un évidement dans l'au moins une couche d'égalisation (1100) et par des éléments structurels électroniques (1210) montés sur la couche de support de circuit (1200) qui pénètrent dans l'au moins une interruption (1120) ou un évidement, sont remplis d'un matériau polymère.

5. Document de valeur ou de sécurité (2000) selon l'une quelconque des revendications précédentes, **caractérisé en ce que** l'au moins une couche de recouvrement (1300) présente une interruption (1320) de sorte qu'un dispositif de capteur (1220) se trouvant dans celle-ci soit exposé vers l'extérieur.

6. Document de valeur ou de sécurité (2000) selon l'une quelconque des revendications précédentes, **caractérisé en ce que** le circuit électrique (1270) comporte un circuit RFID, un dispositif de capteur biométrique (1220) et/ou un dispositif d'affichage électronique (1230).

7. Document de valeur ou de sécurité (2000) selon l'une quelconque des revendications précédentes, **caractérisé en ce que** le document de valeur ou de sécurité (2000) présente un dispositif d'affichage (1230) avec un élément d'affichage électrophorétique, ferroélectrique ou cholestérique (1231) qui affiche durablement des données d'individualisation.

8. Procédé de fabrication d'un document de valeur ou de sécurité (2000) qui contient un circuit électrique (1270), comprenant les étapes de procédé suivantes :
(a) la mise à disposition d'une première couche de document sous la forme d'une couche de support de circuit (1200) supportant le circuit électrique (1270), au moins une deuxième couche de document sous la forme respectivement d'une couche d'égalisation (1100) présentant au moins une interruption (1120) et/ou un évidement et au moins une troisième couche de document sous la forme respectivement d'une couche de recouvrement (1300) ;
(b) l'empilement de la première (1200) et de l'au moins une deuxième (1100) et de l'au moins une troisième couche de document (1300) en un empilement de couches de document (1700) ;
(c) l'assemblage inamovible, en particulier au moyen d'un procédé de laminage, de la première (1200) et de l'au moins une deuxième (1100) et de l'au moins une troisième couche de document (1300), dans lequel une ébauche de document (1000) est générée ; et
(d) l'individualisation de l'ébauche de document (1000), dans lequel le document de valeur ou de sécurité (2000) est généré,
dans lequel la première (1200) et l'au moins une deuxième (1100) et l'au moins une troisième couche de document (1300) sont formées en un matériau composite fibreux qui est formé de duroplaste renforcé par un tissu de fibre de verre à base d'une résine époxy.
